# FASCICULE DE BREVET EUROPEEN

(11) **EP 2 681 345 B1**
(45) Date de publication et mention de la délivrance du brevet: **16.01.2019**
(21) Numéro de dépôt: 12712300.8
(22) Date de dépôt: 29.02.2012
(51) Int. Cl.: B23P 15/04, B21K 25/00, B21D 22/02, B21D 53/92, B23K 20/02, F01D 5/14, F04D 29/32, C22C 29/06, C22C 14/00, B22F 3/15

(54) **PROCEDE DE REALISATION D'UNE PIECE METALLIQUE TELLE QU'UN RENFORT D'AUBE DE TURBOMACHINE**
VERFAHREN ZUR HERSTELLUNG EINES METALLBAUTEILS WIE EINER TURBOMASCHINENSCHAUFELVERSTÄRKUNG
METHOD FOR PRODUCING A METAL COMPONENT SUCH AS A TURBOMACHINE BLADE REINFORCEMENT

(30) Priorité: 01.03.2011 FR 1151658; 01.03.2011 FR 1151662; 01.03.2011 FR 1151661; 01.03.2011 FR 1151656
(43) Date de publication de la demande: 08.01.2014
(73) Titulaire: Safran Aircraft Engines, 75015 Paris (FR)
(72) Inventeur: GODON, Thierry, F-93270 Sevran (FR); DAMBRINE, Bruno, Jacques, Gérard, F-77820 Le Chatelet en Brie (FR); PERROUX, Alain, Robert, Yves, F-91130 Ris Orangis (FR)
(74) Mandataire: Camus, Olivier Jean-Claude
(86) Numéro de dépôt international: PCT/FR2012/050423
(87) Numéro de publication internationale: WO 2012/117201

(56) Documents cités:
- WO-A1-2011/081762
- WO-A1-2012/104537
- FR-A1- 2 939 130
- FR-A1- 2 965 824
- JP-A- H07 157 374
- US-A- 4 301 584
- US-A1- 2010 247 949

## Description

### DOMAINE TECHNIQUE

La présente invention concerne un procédé de réalisation d'une pièce métallique telle qu'un renfort métallique d'aube composite ou métallique de turbomachine.

Plus particulièrement, l'invention concerne un procédé de réalisation d'un renfort métallique de bord d'attaque ou de bord de fuite d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord d'attaque ou un bord de fuite d'aube de tout type de turbomachine, terrestre ou aéronautique, et notamment un turbomoteur d'hélicoptère ou un turboréacteur d'avion, mais également d'hélices telles que des hélices de double soufflantes contrarotatives non carénées (« open rotor » en langue anglaise).

L'invention est également applicable à la réalisation de toutes pièces métalliques massives et de forme géométrique complexe.

### ETAT DE LA TECHNIQUE

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement. Par conséquent, on utilise des aubes en matériaux composites qui sont plus légères.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique en titane réalisée entièrement par fraisage à partir d'un bloc de matière.

Cependant, le renfort métallique d'un bord d'attaque d'aube est une pièce complexe à réaliser, nécessitant de nombreuses opérations de reprises et des outillages complexes impliquant des coûts de réalisation importants.

Il est également connu de réaliser des pièces massives, et notamment des renforts métalliques d'aube de turbomachine à partir d'une structure fibreuse métallique tridimensionnelle réalisée par tissage de fils métallique et d'un procédé de pressage isostatique à chaud dans un outillage provoquant l'agglomération des fils métalliques de la structure fibreuse métallique de manière à obtenir une pièce massive, ce procédé est décrit dans la demande de brevet FR2939130.

Classiquement, le tissage de la structure fibreuse est réalisé par tissage au moyen d'une pluralité de fils de chaîne et de fils de trame métalliques dont l'épaisseur des fils est limitée à un diamètre de l'ordre de quelques dixièmes de millimètres, typiquement entre 0,1mm et 0,3mm.

La structure fibreuse ainsi obtenue par tissage est une structure plane et relativement rigide qu'il est nécessaire de déformer pour obtenir une structure fibreuse préformée de façon à permettre son introduction dans un outillage de forme.

Pour pallier à cette étape déformation par une plieuse postérieure au tissage de la structure fibreuse et limitant par conséquent les dimensions de la structure fibreuse, il a été développé un procédé de fabrication d'une structure fibreuse métallique par tissage successif d'agrafes métalliques, recourbée ou pliée de façon à former par exemple une pièce sensiblement en forme de U ou de V, faisant office de fils de trame. Dans ce procédé décrit dans la demande de brevet FR2965824, document selon l'art. 54(3) CBE, le tissage est réalisé par l'introduction de chacune des branches des agrafes métalliques dans au moins une foulée formée par deux fils de chaîne.

Cependant, le tissage d'agrafes métalliques formées par des fils métalliques pliés nécessite l'utilisation d'un métier à tisser spécifique capable de former deux foulées en même temps pour le passage de chacune des branches d'agrafes.

Il existe également d'autres procédés alternatifs pour la fabrication de pièce massive métalliques, tels que celui décrit dans le document US 4301584. Ils ne donnent toutefois pas satisfaction.

### DESCRIPTION GÉNÉRALE DE L'INVENTION

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'une pièce métallique, telle qu'un renfort métallique d'aube de turbomachine, comportant successivement :
- une étape de positionnement d'une pluralité d'agrafes métalliques dans un outillage de forme présentant une matrice et un poinçon, lesdites agrafes métalliques étant des tronçons de fils métalliques de forme rectiligne pliés en forme de U ou de V non intégrés dans une structure tissée;
- une étape de pressage isostatique à chaud de ladite pluralité d'agrafes métalliques provoquant l'agglomération desdites agrafes métalliques de manière à obtenir une pièce massive.

On entend par agrafe, une pièce métallique recourbée ou pliée de façon à former par exemple une pièce sensiblement en forme de U ou de V.

Grâce à l'invention, la pièce métallique, telle que par exemple un renfort structurel métallique comportant deux courbures selon deux plans distincts (ou un vrillage selon un axe), est réalisée de façon simple et rapide à partir d'une pluralité d'agrafes métalliques, obtenues par une simple opération de mise en forme de tronçons métalliques, tels que des fils métalliques, et d'un procédé de pressage ou de compactage isostatique à chaud (HIP pour Hot Isostatic Pressing en langue anglaise) permettant d'obtenir une pièce compacte et sans porosité par la combinaison de déformation plastique, de fluage et de soudage diffusion.

Les agrafes métalliques sont avantageusement formées par le pliage des tronçons métalliques issus d'une filière pouvant être indifféremment de section circulaire, carré, hexagonale, etc.

Les agrafes métalliques ainsi confectionnées sont facilement positionnables dans l'outillage de forme et permettent ainsi de réaliser des pièces de géométrie complexe telles qu'un renfort d'aube.

Ce procédé de réalisation permet ainsi de s'affranchir de la réalisation complexe du renfort d'aube par usinage dans la masse, de type fraisage, brochage, à partir de méplats nécessitant de grand volume de matière de mise en oeuvre et par conséquent des coûts importants en approvisionnement de matière première. Le procédé permet également de réaliser facilement des renforts métalliques qui respectent des exigences strictes de masse et/ou géométriques.

Avantageusement, la pièce métallique est un renfort métallique de bord d'attaque ou de bord de fuite d'aube de soufflante de turbomachine.

Le procédé de réalisation d'une pièce métallique selon l'invention peut également présenter une ou plusieurs des caractéristiques ci-dessous, considérées individuellement ou selon toutes les combinaisons techniquement possibles :
- ledit procédé est un procédé de réalisation d'un renfort métallique de bord d'attaque, ou de bord de fuite d'aube de turbomachine, ou d'un renfort métallique d'hélice de sorte que ladite pièce massive obtenue lors de ladite étape de pressage isostatique est un renfort métallique ;
- ladite étape de positionnement de ladite pluralité d'agrafes est réalisée par le positionnement agrafe par agrafe dans la matrice dudit outillage de forme ;
- ladite étape de positionnement de ladite pluralité d'agrafes est réalisée par le positionnement agrafe par agrafe sur le poinçon dudit outillage de forme ;
- ladite étape de positionnement de ladite pluralité d'agrafes est réalisée par l'encastrement des branches desdites agrafes dans des orifices aménagés dans ledit poinçon, ledit encastrement étant réalisé par déformation élastique desdites branches ;
- ladite étape de positionnement de ladite pluralité d'agrafes comporte une première sous-étape de pré-positionnement agrafe par agrafe sur un gabarit de forme et une deuxième sous-étape de positionnement de ladite pluralité d'agrafes, pré-positionnées sur ledit gabarit de forme, dans ledit outillage de forme ;
- l'étape de positionnement de ladite pluralité d'agrafes comporte une première sous-étape de pré-positionnement de ladite pluralité d'agrafes métallique sur un cadre amovible, de sorte que lesdites agrafes sont suspendues au dit cadre amovible et une deuxième sous-étape de positionnement du cadre amovible, comportant ladite pluralité d'agrafes, dans un logement agencé dans l'outillage de forme ;
- ledit cadre amovible est formé par deux rails de sorte que lors de la deuxième sous-étape de positionnement dudit cadre amovible, chacun desdits rails dudit cadre amovible est apte à être inséré dans une encoche agencée dans ledit outillage de forme, lesdites encoches formant ledit logement dudit outillage de forme;
- lesdites encoches sont agencées dans la matrice dudit outillage de sorte que ledit cadre amovible est positionné dans ladite matrice lors de ladite étape de positionnement ;
- lesdites encoches sont agencées dans le poinçon dudit outillage de sorte que ledit cadre amovible est positionné dans ledit poinçon lors de ladite étape de positionnement ;
- ladite étape de positionnement de ladite pluralité d'agrafes comporte une première sous-étape de réalisation d'une structure métallique formée par l'assemblage d'une pluralité d'agrafes métalliques présentant un orifice traversant et par au moins un fil métallique introduit dans ledit orifice de chacune desdites agrafes métalliques de ladite pluralité et par une deuxième sous-étape de positionnement de ladite structure métallique dans l'outillage de forme ;
- ledit procédé comporte une étape de réalisation dudit orifice traversant de chacune des agrafes métalliques ;
- ledit orifice traversant est réalisé par des moyens de perçage par laser, lors de ladite étape de réalisation dudit orifice traversant ;
- l'étape de positionnement de ladite pluralité d'agrafes comporte une première sous-étape de réalisation d'une pluralité de structures métalliques tridimensionnelles par solidarisation d'une pluralité d'agrafes métalliques, chacune desdites structures métalliques tridimensionnelles constituant une portion d'une préforme de ladite pièce à réaliser et une deuxième sous-étape de positionnement de ladite pluralité de structures métalliques tridimensionnelles dans l'outillage de forme ;
- ladite sous-étape de réalisation d'une pluralité de structures métalliques tridimensionnelles est réalisée par soudage ou par collage d'une pluralité d'agrafes métalliques ;
- ladite sous-étape de réalisation d'une pluralité de structures métalliques tridimensionnelles est réalisée par soudage ou collage d'un clinquant métallique sur lesdites agrafes métalliques constituant une structure métallique tridimensionnelle, ledit clinquant métallique reliant chaque agrafe métallique d'une structure métallique tridimensionnelle ;
- ledit procédé comporte une étape de réalisation desdites agrafes métalliques par pliage de tronçons métalliques de forme rectiligne réalisés de préférence par formage à froid.

Les agrafes métalliques présentant un orifice traversant sont ainsi facilement assemblable les unes aux autres par enfilement d'au moins un fil métallique à l'intérieur de chaque orifice de la pluralité d'agrafes de manière à réaliser une structure métallique souple (i.e. déformable manuellement en opposition à une déformation nécessitant des moyens mécaniques, hydrauliques, ...) en forme de guirlande ou encore de collier d'agrafes métalliques. La structure métallique est ainsi formée par les agrafes métalliques suspendues aux fils métalliques.

La structure métallique ainsi confectionnée est alors facilement transportable et positionnable dans un outillage de forme comportant une forme complexe, tel qu'un outillage de renfort métallique d'aube de turbomachine comportant deux courbures selon deux plans distincts, la structure métallique souple pouvant s'adapter à n'importe quelles courbures de l'outillage.

En outre, un tel procédé peut permettre de former des pièces présentant des formes non développables, ou encore des pièces présentant des formes enveloppantes comme par exemple une pièce recouvrant en partie les extrémités d'une aube.

### BRÈVE DESCRIPTION DES FIGURES

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation selon l'invention ;
- la figure 2 est une vue partielle en coupe de la figure 1 selon un plan de coupe AA ;
- la figure 3 est un schéma synoptique présentant les principales étapes d'un premier mode de réalisation d'un renfort structurel métallique de bord d'attaque d'aube de turbomachine du procédé de réalisation selon l'invention ;
- la figure 4 illustre une vue du renfort métallique de bord d'attaque d'aube de turbomachine lors de la première étape du procédé illustré à la figure 3 ;
- la figure 5 illustre une vue du renfort métallique de bord d'attaque d'aube de turbomachine lors de la deuxième étape du procédé illustré à la figure 3 ;
- la figure 6 illustre une vue en coupe du renfort métallique de bord d'attaque d'aube de turbomachine selon un premier exemple de réalisation de la troisième étape du premier mode de réalisation du procédé illustré en figure 3 ;
- la figure 7 illustre une vue en coupe du renfort métallique de bord d'attaque d'aube de turbomachine selon un deuxième exemple de réalisation de la troisième étape du premier mode de réalisation du procédé illustré en figure 3 ;
- la figure 8 illustre une vue en coupe du renfort métallique de bord d'attaque d'aube de turbomachine lors de l'étape pressage isostatique des différents modes de réalisation du procédé selon l'invention illustré aux figure 3, 9, 15 et 23 ;
- la figure 9 est un schéma synoptique présentant les principales étapes d'un deuxième mode de réalisation d'un renfort structurel métallique de bord d'attaque d'aube de turbomachine du procédé de réalisation selon l'invention ;
- la figure 10 illustre une vue du renfort métallique de bord d'attaque d'aube de turbomachine selon un deuxième exemple de réalisation de la deuxième étape du deuxième mode de réalisation du procédé illustré à la figure 9 ;
- la figure 11 illustre une vue en coupe du renfort métallique de bord d'attaque d'aube de turbomachine selon le premier exemple de réalisation décrit à la figure 5 de la troisième étape du deuxième mode de réalisation du procédé illustré en figure 9 ;
- la figure 12 illustre une vue en coupe du renfort métallique de bord d'attaque d'aube de turbomachine selon le deuxième exemple de réalisation décrit à la figure 10 de la troisième étape du deuxième mode de réalisation du procédé illustré en figure 9 ;
- la figure 13 illustre une vue en coupe du renfort métallique de bord d'attaque d'aube de turbomachine selon un premier exemple de réalisation de la quatrième étape du deuxième mode de réalisation du procédé illustré en figure 9 ;
- la figure 14 illustre une vue en coupe du renfort métallique de bord d'attaque d'aube de turbomachine selon un deuxième exemple de réalisation de la quatrième étape du deuxième mode de réalisation du procédé illustré en figure 9 ;
- la figure 15 est un schéma synoptique présentant les principales étapes d'un troisième mode de réalisation d'un renfort structurel métallique de bord d'attaque d'aube de turbomachine du procédé de réalisation selon l'invention ;
- la figure 16 illustre une vue du renfort métallique de bord d'attaque d'aube de turbomachine selon un premier exemple de réalisation de la troisième étape du troisième mode de réalisation du procédé illustré à la figure 15 ;
- la figure 17 illustre une vue du renfort métallique de bord d'attaque d'aube de turbomachine selon un deuxième exemple de réalisation de la troisième étape du troisième mode de réalisation du procédé illustré à la figure 15 ;
- les figures 18 et 19 illustre une vue du renfort métallique de bord d'attaque d'aube de turbomachine d'un troisième exemple de réalisation de la deuxième et de la troisième étape du troisième mode de réalisation du procédé selon l'invention ;
- la figure 20 illustre une vue du renfort métallique de bord métallique de bord d'attaque d'aube de turbomachine lors de quatrième étape du troisième mode de réalisation du procédé illustré à la figure 15 selon le premier exemple de réalisation illustré à la figure 16 ;
- la figure 21 illustre une vue du renfort métallique de bord métallique de bord d'attaque d'aube de turbomachine lors de quatrième étape du troisième mode de réalisation du procédé illustré à la figure 15 selon le deuxième exemple de réalisation illustré à la figure 17 ;
- la figure 22 une vue du renfort métallique de bord d'attaque d'aube de turbomachine lors de la cinquième étape du procédé illustré à la figure 15 ;
- la figure 23 est un schéma synoptique présentant les principales étapes d'un quatrième mode de réalisation d'un renfort structurel métallique de bord d'attaque d'aube de turbomachine du procédé de réalisation selon l'invention ;
- la figure 24 illustre une vue en coupe du renfort métallique de bord d'attaque d'aube de turbomachine lors de la troisième étape du quatrième mode de réalisation du procédé illustré en figure 23 ;
- la figure 25 illustre une vue en coupe du renfort métallique de bord d'attaque d'aube de turbomachine selon un premier exemple de réalisation de la quatrième étape du quatrième mode de réalisation du procédé illustré en figure 23 ;
- la figure 26 illustre une vue en coupe du renfort métallique de bord d'attaque d'aube de turbomachine selon un deuxième exemple de réalisation de la quatrième étape du quatrième mode de réalisation du procédé illustré en figure 23
- la figure 27 illustre une vue en coupe du renfort métallique de bord d'attaque d'aube de turbomachine selon un troisième exemple de réalisation de la quatrième étape du quatrième mode de réalisation du procédé illustré en figure 23.

Dans toutes les figures, les éléments communs portent les mêmes numéros de référence sauf précision contraire.

### DESCRIPTION DÉTAILLÉE D'UN PREMIER MODE DE RÉALISATION

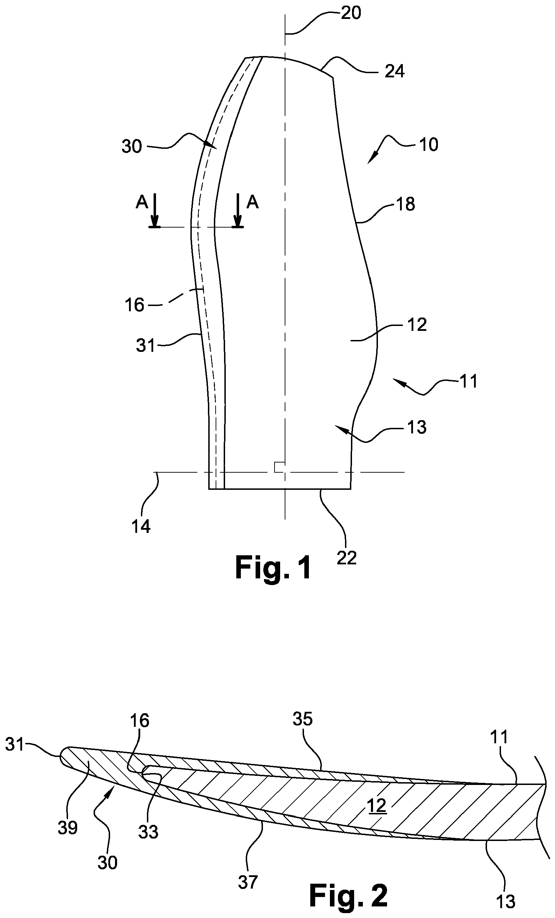

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seule la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par mise en forme d'une texture fibreuse tissée. A titre d'exemple, le matériau composite utilisé peut être composé par un assemblage de fibres de carbone tissées et d'une matrice résineuse, l'ensemble étant formé par moulage au moyen d'un procédé d'injection de résine de type RTM (pour « Resin Transfer Molding ») ou encore VARTM (pour VAccum Resin Transfer Molding).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou aminci en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base de titane. Ce matériau présente en effet une grande capacité d'absorption de l'énergie due aux chocs. Le renfort est collé sur l'aube 10 au moyen de colle connue de l'homme du métier, comme par exemple une colle époxy.

Ce type de renfort structurel métallique 30 utilisé pour le renfort d'aube composite de turbomachine est plus particulièrement décrit dans la demande de brevet EP1908919.

Le procédé selon l'invention permet de réaliser notamment un renfort structurel tel qu'illustré à la figure 2, la figure 2 illustrant le renfort 30 dans son état final.

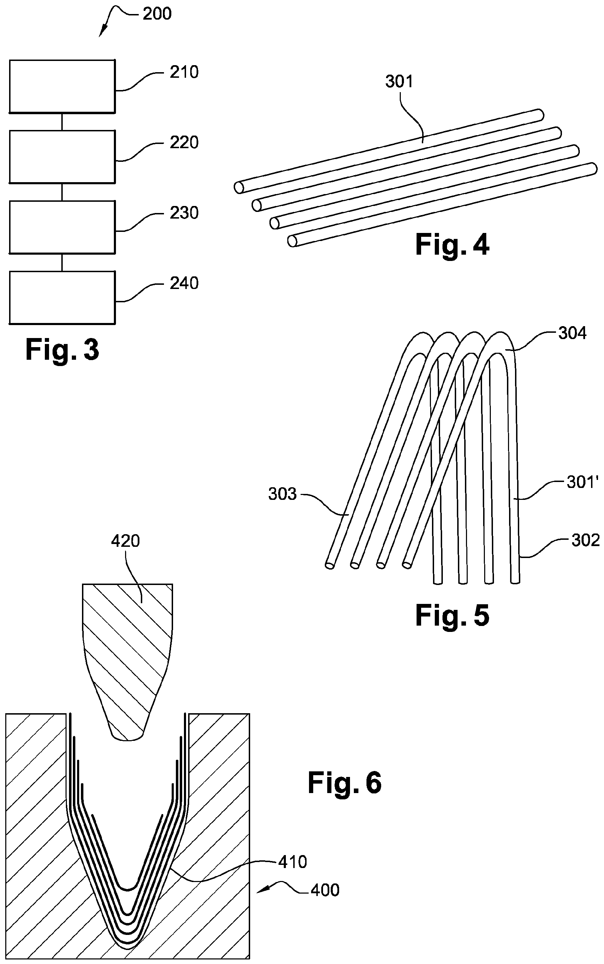

La figure 3 représente un schéma synoptique illustrant les principales étapes d'un procédé de réalisation 200 d'une pièce métallique permettant de réaliser par exemple un renfort structurel métallique 30 de bord d'attaque d'aube 10 tel qu'illustré aux figures 1 et 2.

La première étape 210 du procédé de réalisation 200 est une étape de découpe d'une pluralité de tronçons métalliques 301 à partir d'un fil métallique continue par exemple issu d'une filière, dont chaque longueur de tronçon 301 est déterminée en fonction de la pièce finale à réaliser. Des tronçons métalliques 301 ainsi découpés sont illustrés à la figure 4.

Chaque tronçon métallique 301 peut donc avoir une longueur spécifique en fonction de la partie du renfort métallique 30 qu'il représente, la longueur de recouvrement des flancs 35, 37 du renfort 30 variant selon la deuxième direction 20 entre le pied 22 et le sommet 24 de l'aube.

Le diamètre des tronçons métalliques 301 peut varier en fonction des besoins de l'utilisateur, et de l'épaisseur matière nécessaire pour la réalisation de la pièce. La détermination du diamètre des tronçons est réalisée en fonction d'un compromis entre souplesse et épaisseur matière nécessaire dans l'outillage.

Le tronçon métallique est typiquement formé à partir d'un fil métallique de section circulaire mais peut tout aussi bien être formé à partir d'un profil métallique de section carrée, rectangulaire, hexagonale, etc.

La deuxième étape 220 du procédé de fabrication 200 est une étape de formage à froid ou de mise en forme des tronçons métalliques 301 découpées lors de la première étape 210. Cette deuxième étape est illustrée à la figure 5.

Cette deuxième étape permet la mise en forme à froid (i.e. à température ambiante) de chaque tronçon métallique 301 rectiligne par déformation plastique de façon à obtenir un tronçon métallique préformé 301', appelé agrafe par la suite, dont la géométrie est déterminée en fonction de la pièce finale à réaliser et notamment en fonction de la forme de l'outillage de compaction servant à la réalisation de la pièce finale.

Les agrafes 301' sont réalisées par déformation des tronçons métalliques rectilignes 301 au moyen d'un outillage simple qu'il est possible d'actionner manuellement, la déformation individuelle de chaque tronçon ne nécessitant pas des moyens hydrauliques conséquent pour réaliser la déformation. Avantageusement, l'outillage de déformation est un outillage classique de déformation qu'il est possible d'automatiser et de calibrer tant au niveau de la forme finale des agrafes métalliques 301' qu'en force de pression en fonction des besoins de l'utilisateur.

Ainsi, les agrafes 301' peuvent être formées de façon individuelle ou par groupe d'une pluralité de tronçons métalliques 301.

L'étape 220 de déformation des tronçons permet ainsi de passer d'un tronçon métallique 301 de forme rectiligne à un tronçon métallique 301' préformé, de la forme d'une agrafe, comportant deux branches 302 et 303 sensiblement rectilignes reliées entre-elles par un élément de jonction 304 ayant subi au moins une déformation. Les longueurs des branches 302 et 303 peuvent être différentes pour une même agrafe. Le tronçon métallique 301 peut être aussi entièrement ou partiellement écrasé (par exemple pour une restriction d'épaisseur locale).

Dans le cadre de la réalisation d'un renfort métallique d'aube de turbomachine, les agrafes 301' sont avantageusement en forme de U ou de V.

La troisième étape 230 du procédé de réalisation 200 est une étape de positionnement d'une pluralité d'agrafes 301' dans un outillage de forme.

L'outillage 400 comporte une empreinte 410 (matrice) correspondant à la forme externe finale du renfort métallique 30 et une contre-empreinte 420, 520 (poinçon) correspondant à la forme interne finale du renfort métallique de bord d'attaque.

Selon un premier exemple de réalisation illustré à la figure 6, l'étape de positionnement 230 est réalisée par positionnement des agrafes 301' dans l'empreinte 410 de l'outillage de forme 400. Le positionnement est réalisé agrafe par agrafe sur toute la longueur de l'empreinte 410. L'espacement entre les différentes agrafes 301' (i.e. le pas) est défini en fonction de l'épaisseur de l'agrafe 301' et des besoins matière de la pièce à réaliser.

Les agrafes 301' comportant la forme complémentaire de l'empreinte 410, le positionnement se réalise simplement et permet donc d'obtenir un dépôt de matière métallique épousant la forme complexe de l'empreinte 410 comportant deux courbures selon deux plans distincts.

Lors de cette étape de positionnement 230, plusieurs couches d'agrafes 301', telles qu'illustré à la figure 6, peuvent être superposées afin de respecter les épaisseurs de matière nécessaires à la réalisation de la pièce. En particulier, l'épaisseur de la pièce n'est pas nécessairement constante : la disposition et le nombre des agrafes peuvent alors varier le long de la pièce pour s'adapter à ces variations d'épaisseurs.

Bien entendu, la forme des agrafes 301' et la longueur des branches 302, 303 des différentes couches peuvent également être ajustées en fonction des besoins de matière nécessaires à la réalisation du renfort métallique 30.

Afin d'améliorer, le maintien des agrafes positionnées dans l'empreinte, les agrafes peuvent avantageusement comporter deux épaulements réalisés lors de l'étape 220 de formage à froid au niveau de chaque extrémités libres des agrafes en forme de V ou de U. Les épaulements sont réalisés par pliage d'une partie de l'extrémité de chaque branche de façon à réaliser deux parties aptes à former des appuis aidant le positionnement des agrafes et leur maintient dans l'empreinte.

Selon une variantede réalisation, les extrémités, aptes à former les épaulements, peuvent également être déformées de sorte que les épaulements ont la forme de méplats comportant au moins une surface plane apte à venir en appui sur l'empreinte.

A cet effet, l'outillage de forme est agencé de façon à proposer au niveau de l'empreinte un décrochement de matière permettant aux agrafes de prendre appuis dans l'empreinte. De façon complémentaire, le poinçon de l'outillage de forme comporte deux épaulements de part et d'autre de la forme en V du poinçon aptes à venir se positionner dans les décrochements de matière agencés dans l'empreinte lors de la fermeture de l'outillage.

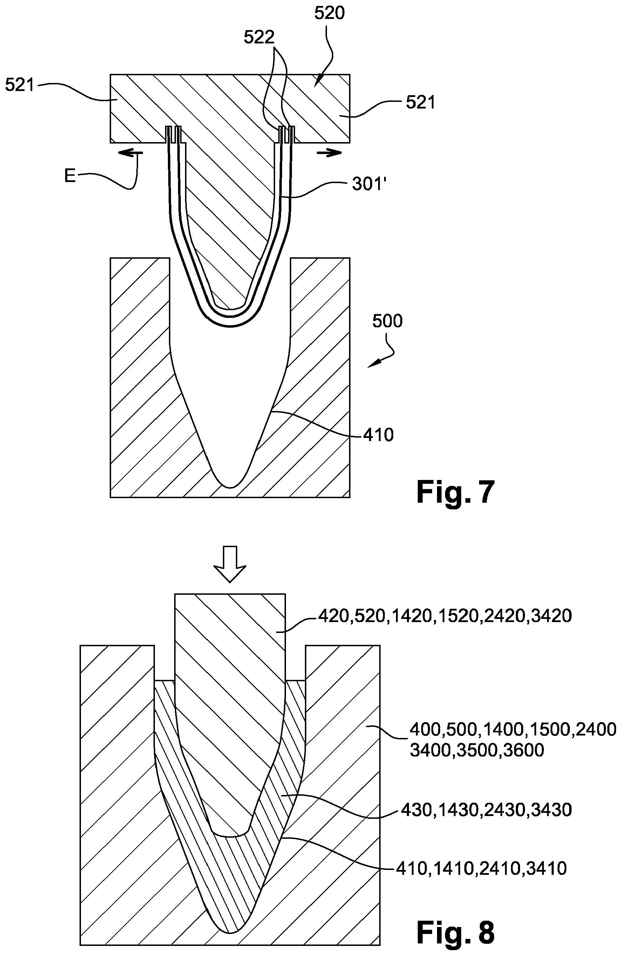

Selon un deuxième exemple de réalisation illustré à la figure 7, l'étape de positionnement 230 est réalisée par positionnement des agrafes 301' sur le poinçon 520 de l'outillage de forme 500.

A cet effet, l'ouillage de forme 500 comporte une empreinte 410 (matrice) similaire au premier exemple de réalisation, et une contre-empreinte 520 (poinçon) correspondant à la forme interne finale du renfort métallique de bord d'attaque et comportant dans sa partie supérieure deux épaulements 521 de part et d'autre de la forme en V correspondant à la forme interne finale du renfort métallique. La face des épaulements 521, en regard vers l'intérieur de l'outillage, comporte une pluralité d'orifices 522, réparties sur toute la longueur du poinçon 520, aptes à recevoir les extrémités des branches 302, 303 des agrafes 301'. Ainsi, selon ce second exemple de réalisation, le positionnement des agrafes 301' sur le poinçon 520 est réalisé agrafe par agrafe par encastrement des branches 302, 303 dans les orifices 522 situés de part et d'autre de la forme en V du poinçon 520. Le maintien des agrafes 301' en position est réalisé grâce à la propriété élastique des branches 302, 303 exerçant une pression sur les faces des orifices 522 par retour élastique.

De façon avantageuse et pour garantir un bon maintien des agrafes en position, la mise en forme des agrafes lors de la deuxième étape est réalisée de façon à obtenir des agrafes dont l'écartement en position de repos (i.e. sans contrainte extérieure) entre les deux branches 302, 303 est plus grand ou plus petit que l'écartement entre deux orifices 522 situés de part et d'autre de la forme en V du poinçon 520.

Ainsi, lorsque l'écartement des branches 302, 303 en position de repos est supérieur à l'écartement de deux orifices 522, les agrafes 301' sont maintenues encastrées par retour élastique des branches 302, 303 qui exercent un effort élastique, selon la direction illustrée par les flèches référencées E, pour retrouver leur position de repos.

De façon inverse, lorsque l'écartement des branches 302, 303 en position de repos est inférieur à l'écartement de deux orifices 522, les agrafes 301' sont maintenues encastrées par retour élastique des branches 302, 303 qui exercent un effort élastique, selon la direction opposée à la direction illustrée par les flèches référencée E, pour retrouver leur position de repos.

De façon similaire au premier exemple de réalisation illustré précédemment, l'espacement (i.e. le pas) entre les différentes agrafes 301' est défini en fonction de l'épaisseur de l'agrafe 301' et des besoins matière de la pièce à réaliser.

Plusieurs couches d'agrafes, telles qu'illustré à la figure 7, peuvent être superposées afin de respecter les épaisseurs de matière nécessaires à la réalisation de la pièce. La forme des agrafes 301' et la longueur des branches 302, 303 des différentes couches peuvent également être ajustées en fonction des besoins de matière nécessaires à la réalisation du renfort métallique 30.

Selon un troisième exemple de réalisation, l'étape de positionnement 230 peut comporter une sous-étape de pré-positionnement de la pluralité d'agrafes, agrafe par agrafe, sur un gabarit de forme, l'ensemble des agrafes étant ensuite positionné dans l'outillage de forme 400, 500 soit dans l'empreinte 410, soit sur le poinçon 520 comme décrit précédemment.

Les tronçons métalliques 301 permettant la réalisation des agrafes 301' sont principalement des fils à base de titane. Toutefois, il est possible d'incorporer parmi les agrafes en titane des agrafes métalliques à base de carbure de silicium et de titane (SiC-Ti), de fils enduits de Bore (fil SiC-Bore) ou encore des agrafes en Carbure de Silicium (fil SiC-SiC) dans la mesure où le rayon de courbure des tronçons 301 autorise la déformation de ces fils « composites » sans les casser. Les tronçons métalliques 301 ont sensiblement une épaisseur variant entre 0,1 mm et 5mm.

L'étape 230 de positionnement des agrafes 301' peut également comporter une sous-étape d'insertion d'un insert entre deux couches successives d'agrafes 301' de manière à fournir par exemple une surépaisseur de matière locale plus conséquente, un renfort spécifique réalisé dans un matériau différent ou encore pour réaliser un renfort métallique creux.

A titre d'exemple, l'insert peut être un insert massif réalisé par un procédé de forgeage, d'usinage, ou par coulé. ou un insert tissé au moyen de fils métalliques par exemple avec des fils de titane et/ou des fils à base de carbure de silicium et de titane (SiC-Ti), et/ou des fils enduits de Bore (SiC-Bore), ou encore de Carbure de Silicium (SiC-SiC). Quelle que soit la nature du matériau utilisé pour la réalisation de l'insert inséré entre les différentes couches d'agrafes, il est nécessaire que ce matériau soit compatible avec la nature du matériau utilisé pour la réalisation des agrafes métalliques 301' et présente des propriétés permettant le formage superplastique et le soudage diffusion.

Pour la réalisation d'un renfort métallique creux (non représenté), l'insert est un insert fugitif réalisé dans un matériau différent du matériau utilisé pour la réalisation des agrafes métalliques 301'.

On entend par « insert fugitif » un insert qui n'est pas destiné à être permanant et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

L'insert fugitif est par exemple réalisé dans un matériau capable de résister à une haute température, de l'ordre de 900°C, une haute pression, de l'ordre de 1000 bar, et qui est compatible avec les matériaux des agrafes métalliques 301' de façon à ne pas créer d'impuretés ou d'oxydation.

Le matériau de l'insert fugitif doit également pouvoir être attaqué chimiquement par dissolution au moyen d'un agent chimique.

Avantageusement, l'insert fugitif est réalisé en cuivre, ou en quartz ou en silice.

La forme de l'insert fugitif incorporé dans l'empilement des couches d'agrafes 301' est dépendante de la forme de la cavité interne finale désirée.

La quatrième étape 240 du procédé de réalisation 200, illustrée à la figure 8, est une étape de pressage isostatique à chaud (HIP pour Hot Isostatic Pressing en langue anglaise) de l'empilement formé par les différentes couches d'agrafes positionnées dans l'outillage 400, 500.

Le pressage isostatique à chaud est un procédé de fabrication très utilisé et connu pour réduire la porosité des métaux et influer sur la densité de nombreux métaux par exemple sous forme de poudre pré-compacté. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce massive 430.

La pièce massive 430 résultant de l'étape de pressage isostatique comporte les profils interne et externe du renfort métallique 30. La pièce massive 430 est ensuite démoulée de l'outillage 400.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence de molécules d'oxygène dans l'outillage et au niveau de la structure fibreuse, lors de l'étape de pressage isostatique du titane.

L'outillage 400, 500 est réalisé dans un alliage mécanique dit superalliage ou alliage à haute performance.

L'étape 240 de pressage isostatique peut comporter préalablement une étape de nettoyage, de dégraissage et/ou d'une attaque chimique des agrafes métalliques 301' de façon à supprimer les impuretés résiduelles des différentes couches d'agrafes.

Avantageusement, l'étape de nettoyage des impuretés est réalisée par trempage de l'ensemble des agrafes positionnées dans l'outillage dans un bain d'agent nettoyant ou d'agent chimique.

Dans le cadre de fabrication d'un renfort métallique creux, le procédé selon l'invention peut comporter une étape supplémentaire d'attaque chimique de l'insert, introduit entre les différentes couches d'agrafes 301', et faisant partie intégrante de la pièce massive 430 compactée. L'attaque chimique est réalisée au moyen d'un agent chimique apte à attaquer le matériau dans lequel l'insert est réalisé. L'attaque chimique de l'insert fugitif permet de dissoudre l'insert fugitif de sorte que l'espace libéré par l'insert dissout forme la cavité interne du renfort métallique creux. Avantageusement, l'étape d'attaque chimique est réalisée par trempage de la pièce massive 430 dans un bain comportant l'agent chimique apte à dissoudre l'insert. L'agent chimique est par exemple un acide ou une base.

Avantageusement, l'agent chimique est apte à dissoudre le cuivre, le quartz ou encore la silice.

### DESCRIPTION DÉTAILLÉE D'UN DEUXIEME MODE DE RÉALISATION

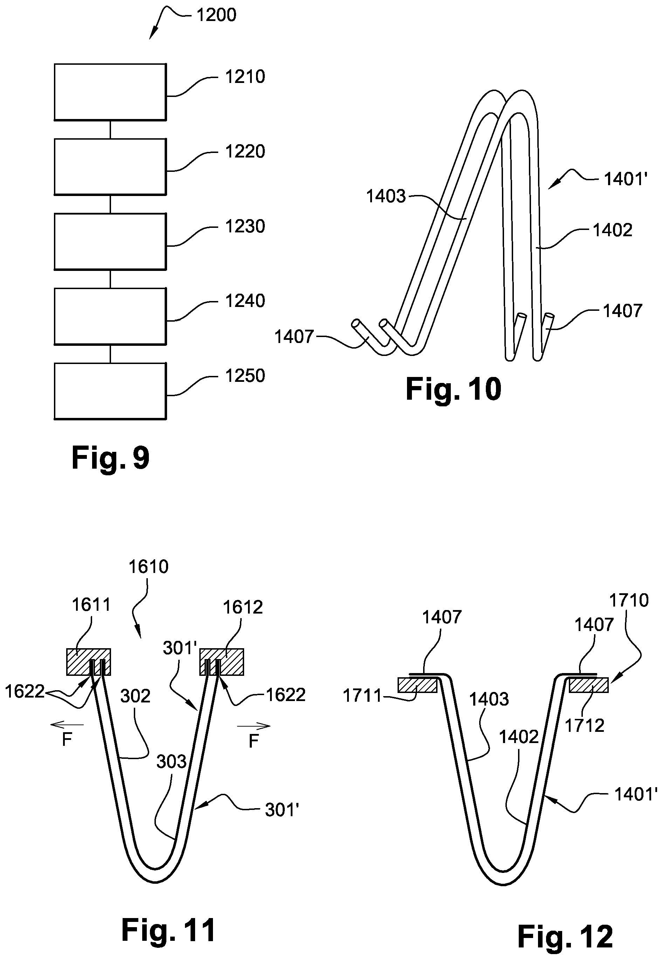

La figure 9 représente un schéma synoptique illustrant les principales étapes du deuxième mode de réalisation du procédé de réalisation 1200 d'une pièce métallique permettant de réaliser par exemple un renfort structurel métallique 30 de bord d'attaque d'aube 10, tel qu'illustré aux figures 1 et 2.

Dans ce deuxième mode de réalisation, la première étape 1210 du procédé de réalisation 1200 est une étape de découpe d'une pluralité de tronçons métalliques 301 à partir d'un fil métallique continue par exemple issu d'une filière, dont chaque longueur de tronçon 301 est déterminée en fonction de la pièce finale à réaliser. Des tronçons métalliques 301 ainsi découpés sont illustrés à la figure 4.

Chaque tronçon métallique 301 peut donc avoir une longueur spécifique en fonction de la partie du renfort métallique 30 qu'il représente, la longueur de recouvrement des flancs 35, 37 du renfort 30 variant selon la deuxième direction 20 entre le pied 22 et le sommet 24 de l'aube.

Le diamètre des tronçons métalliques 301 peut varier en fonction des besoins de l'utilisateur, et de l'épaisseur matière nécessaire pour la réalisation de la pièce. La détermination du diamètre des tronçons est réalisée en fonction d'un compromis entre souplesse et épaisseur matière nécessaire dans l'outillage.

Le tronçon métallique est typiquement formé à partir d'un fil métallique de section circulaire mais peut tout aussi bien être formé à partir d'un profil métallique de section carrée, rectangulaire, hexagonale, etc

La deuxième étape 1220 du procédé de fabrication 1200 est une étape de formage à froid ou de mise en forme des tronçons métalliques 301 découpées lors de la première étape 1210. Cette deuxième étape est illustrée à la figure 5.

Cette deuxième étape 1220 permet la mise en forme à froid (i.e. à température ambiante) de chaque tronçon métallique 301 rectiligne par déformation plastique. Cette étape permet donc d'obtenir un tronçon métallique préformé 301', appelé agrafe par la suite, dont la géométrie est déterminée en fonction de la pièce finale à réaliser et notamment en fonction de la forme de l'outillage de compaction servant à la réalisation de la pièce finale.

Les agrafes 301' sont réalisées par déformation des tronçons métalliques rectilignes 301 au moyen d'un outillage simple qu'il est possible d'actionner manuellement, la déformation individuelle de chaque tronçon ne nécessitant pas des moyens hydrauliques conséquent pour réaliser la déformation du tronçon métallique 301. Avantageusement, l'outillage de déformation est un outillage classique de déformation qu'il est possible d'automatiser et de calibrer tant au niveau de la forme finale des agrafes métalliques 301' qu'en force de pression en fonction des besoins de l'utilisateur.

Ainsi, les agrafes 301' peuvent être formées de façon individuelle ou par paquet composé d'une pluralité de tronçons métalliques 301.

L'étape 1220 de déformation des tronçons permet ainsi de passer d'un tronçon métallique 301 de forme rectiligne à un tronçon métallique 301' préformé formant une agrafe 301', comportant deux branches 302 et 303 sensiblement rectilignes jointes entre-elles à l'une de leur extrémité par un élément de jonction 304 ayant subi au moins une déformation. Les longueurs des branches 302 et 303 peuvent être différentes pour une même agrafe 301'. Le tronçon métallique 301 peut être aussi entièrement ou partiellement écrasé (par exemple pour une restriction d'épaisseur locale) lors de l'étape de déformation.

Dans le cadre de la réalisation d'un renfort métallique d'aube de turbomachine, les agrafes 301' sont avantageusement en forme de U ou de V.

Selon une variante de réalisation, l'étape 1220 de formage à froid comporte une opération supplémentaire consistant à former les extrémités 1405, 1406 des branches 1402, 1403 des agrafes 1401', de façon à créer des agrafes 1401' comportant à leurs extrémités libres des épaulements 1407 telles qu'illustrées à la figure 10.

La troisième étape 1230 du procédé de réalisation 1200 est une étape de positionnement d'une pluralité d'agrafes 301' sur un cadre 1610 formé par deux rails 1611 et 1612, illustrée aux figures 11 et 12. La forme des rails 1611, 1711 et 1612, 1712 suit la fibre neutre de la pièce à réaliser, comme par exemple la fibre neutre complexe du renfort d'aube.

Le positionnement de la pluralité d'agrafes 301', 1401' est réalisé agrafe par agrafe ou encore par paquet d'agrafes préalablement positionnées et maintenues solidaires par des moyens de solidarisation. A titre d'exemple, les agrafes 301', 1401' sont maintenues par paquets, de façon à former une structure métallique tridimensionnelle, par soudage, ou encore par collage, de bandes métalliques, dites clinquants métalliques découpées préalablement dans une feuille métallique de faible épaisseur.

L'espacement entre chaque agrafe 301', 1401' (i.e. le pas) est défini en fonction de l'épaisseur de l'agrafe 301', 1401' et des besoins matière de la pièce à réaliser.

Selon le premier exemple de réalisation illustré à la figure 11, les rails 1611 et 1612 du cadre 1610 comportent des moyens d'encastrement 1622, tels que des orifices, permettant de maintenir en position les agrafes 301' encastrées en utilisant la propriété élastique des branches 302, 303 des agrafes 301'. Les agrafes 301' sont alors maintenues en position en exerçant une pression contre les parois des moyens d'encastrement 1622 par retour élastique des branches 302 et 303 préalablement déformées pour permettre leur introduction dans les moyens d'encastrement 1622.

De façon avantageuse et pour garantir un bon maintien en position des agrafes 301' sur le cadre 1610, la mise en forme des agrafes lors de la deuxième étape 1220 est réalisée afin d'obtenir, en position de repos (i.e. sans contrainte extérieure), un écartement entre les deux branches 302, 303 de l'agrafes 301' supérieur ou inférieur à l'écartement entre deux moyens d'encastrement 1622 situés respectivement sur chacun des rails 1611 et 1612 du cadre 1610.

Ainsi, lorsque l'écartement des branches 302, 303 en position de repos est supérieur à l'écartement de deux moyens d'encastrement 1622 situés sur chacun des rails 1611 et 1612, les agrafes 301' sont maintenues encastrées par retour élastique des branches 302, 303 exerçant une force de pression contre les parois des moyens d'encastrement 1622, selon une direction illustrée par les flèches référencées F, afin de retrouver leur position de repos.

De façon inverse, lorsque l'écartement des branches 302, 303 en position de repos est inférieur à l'écartement de deux moyens d'encastrement 1622 situés sur chacun des rails 1611 et 1612, les agrafes 301' sont maintenues encastrées par retour élastique des branches 302, 303 qui exercent une force de pression contre les parois des moyens d'encastrement 1622, selon la direction opposée à la direction illustrée par les flèches référencée F, afin de retrouver leur position de repos.

Dans cette troisième étape 1230 du procédé de réalisation 1200, plusieurs couches d'agrafes 301', telles qu'illustrées à la figure 5, peuvent se superposer afin de respecter les épaisseurs de matière nécessaires à la réalisation de la pièce. A cet effet, les rails 1611 et 1612 du cadre comportent plusieurs rangées de moyens d'encastrement 1622. Sur la figure 11 représentant une vue en coupe du cadre 1610, deux rangées de moyens d'encastrement 1622 sont représentées sur chaque rail 1611 et 1612 du cadre 1610. La forme des agrafes 301', des différentes couches superposées, peut également être dépendante des besoins de matière localisés qui sont nécessaires à la réalisation du renfort métallique 30. Bien entendu, la forme et la longueur des agrafes 301' des différentes couches peuvent également être ajustées en fonction des besoins de matière nécessaires à la réalisation du renfort métallique 30.

Selon le deuxième exemple de réalisation illustré à la figure 12, les agrafes 1401' sont maintenues en position sur le cadre 1710 par les épaulements 1407 situés de part et d'autre de la forme en V ou en U de l'agrafe 1401'. Ainsi, les deux épaulements 1407 de l'agrafe permettent de la maintenir suspendu sur le cadre 1710 en prenant appui sur chacun des rails 1711, 1712 du cadre 1710.

Selon ce deuxième exemple de réalisation, plusieurs couches d'agrafes 1401' peuvent également se superposer afin de respecter les épaisseurs de matière nécessaires à la réalisation de la pièce.

Les agrafes 301' et 1401' des différentes couches sont principalement réalisées à partir de fils métalliques à base de titane. Toutefois, il est également possible d'incorporer, parmi les agrafes 301', 1401' en titane positionnées sur le cadre 1610, 1710, des agrafes métalliques à base de carbure de silicium et de titane (SiC-Ti), de fils enduits de Bore (fil SiC-Bore) ou encore des agrafes en Carbure de Silicium (fil SiC-SiC) dans la mesure où le rayon de courbure des agrafes 301', 1401' autorise une déformation de ces fils, dits « fils composites », sans atteindre leur limite de rupture.

Les agrafes 301', 1401' sont réalisées à partir de tronçons métalliques d'une épaisseur variant sensiblement de 0,1mm à 5mm.

L'étape 1230 de positionnement des agrafes 301', 1401' peut également comporter une sous-étape d'insertion d'un insert entre deux couches successives d'agrafes 301', 1401' de manière à fournir par exemple une surépaisseur locale plus conséquente de matière, un renfort spécifique réalisé dans un matériau différent ou encore pour réaliser un renfort métallique creux.

A titre d'exemple, l'insert peut être un insert massif réalisé par un procédé de forgeage, d'usinage, par coulé. ou un insert tissé au moyen de fils métalliques par exemple avec des fils de titane et/ou des fils à base de carbure de silicium et de titane (SiC-Ti), d'aluminium (SIC-Al) dans le cas d'agrafes en alliage d'aluminium, et/ou des fils enduits de Bore (SiC-Bore), ou encore de Carbure de Silicium (SiC-SiC). Quelle que soit la nature du matériau utilisé pour la réalisation de l'insert inséré entre les différentes couches d'agrafes 301', 1401', il est nécessaire que ce matériau soit compatible avec la nature du matériau utilisé pour la réalisation des agrafes métalliques 301', 1401' et présente des propriétés permettant le formage superplastique et le soudage diffusion.

Pour la réalisation d'un renfort métallique creux (non représenté), l'insert est un insert fugitif réalisé dans un matériau différent du matériau utilisé pour la réalisation des agrafes métalliques 301', 1401'.

On entend par « insert fugitif » un insert qui n'est pas destiné à être permanant et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

L'insert fugitif est par exemple réalisé dans un matériau capable de résister à une haute température, de l'ordre de 900°C, une haute pression, de l'ordre de 1000 bar, et qui est compatible avec les matériaux des agrafes métalliques 301', 1410' de façon à ne pas créer d'impuretés ou d'oxydation.

Le matériau de l'insert fugitif doit également pouvoir être attaqué chimiquement par dissolution au moyen d'un agent chimique.

Avantageusement, l'insert fugitif est réalisé en cuivre, ou en quartz ou en silice.

La forme de l'insert fugitif incorporé dans l'empilement des couches d'agrafes 301', 1401' est dépendante de la forme de la cavité interne finale désirée.

La quatrième étape 1240 du procédé de réalisation 1200 est une étape de positionnement du cadre 1610, 1710 comportant la pluralité d'agrafes 301', 1401' dans un outillage de forme 1400, 1500.

L'outillage 1400, 1500 comporte une matrice 1440, 1540 présentant une empreinte 1410 correspondant à la forme externe finale du renfort métallique 30 et un poinçon 1420, 1520 correspondant à la forme interne finale du renfort métallique de bord d'attaque.

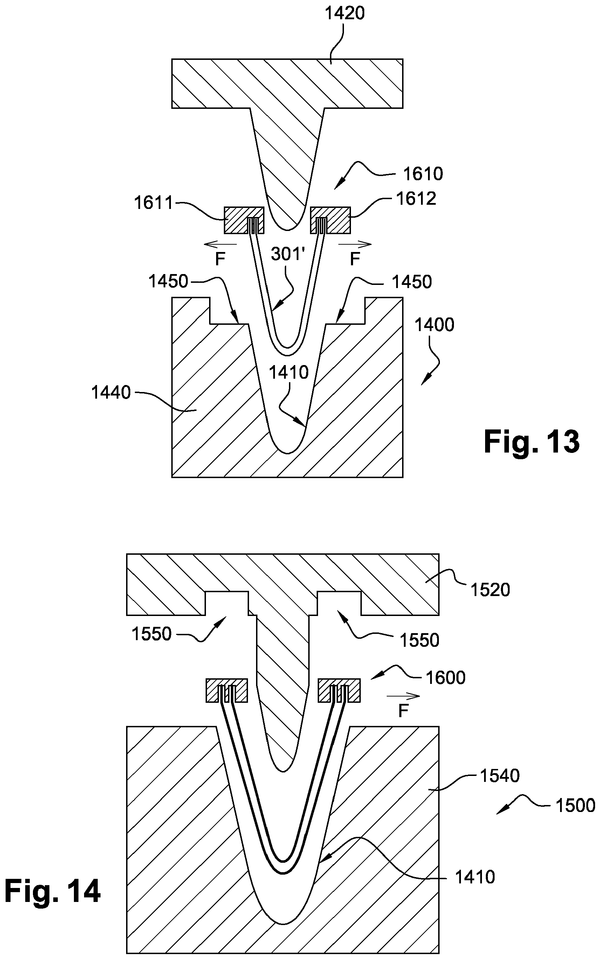

Cette étape 1240 du procédé de réalisation 1200 est illustrée aux figures 13 et 14 avec le cadre 1610 du premier exemple de réalisation décrit aux figures 5 et 11. Toutefois, cette étape est également applicable au cadre 1710 et aux agrafes 1401' du second mode de réalisation décrit aux figures 9 et 12.

Selon une première variante de réalisation illustrée à la figure 13, le positionnement du cadre 1610 est réalisé dans la matrice 1440 de l'outillage de forme 1400.

A cet effet, la matrice 1440 du l'outillage de forme 1400 comporte dans sa partie supérieure deux encoches 1450, situées de part et d'autre de l'empreinte 1410, formant un logement apte à recevoir le cadre 1610.

La forme des encoches 1450 est complémentaire de la forme du cadre 1610 de sorte que le cadre 1610 est mise en place dans les encoches 1450 simplement par emboîtement.

Les agrafes 301' comportant la forme complémentaire de l'empreinte 1410, le positionnement du cadre 1610 comportant la pluralité d'agrafes 301' se réalise simplement et permet donc d'obtenir un dépôt de matière métallique épousant la forme complexe de l'empreinte 1410 comportant deux courbures selon deux plans distincts.

Selon une deuxième variante de réalisation illustrée à la figure 14, l'étape de positionnement 1240 est réalisée par le positionnement du cadre 1610 sur le poinçon 1520 de l'outillage de forme 1500.

A cet effet, l'ouillage de forme 1500 comporte une matrice 1540 présentant une empreinte 1410 similaire à la première variante de réalisation, et un poinçon 1520, correspondant à la forme interne finale du renfort métallique de bord d'attaque. Le poinçon 1520 comporte dans sa partie supérieure deux encoches 1550 situées de part et d'autre de la forme en V correspondant à la forme interne finale du renfort métallique.

De façon similaire à la variante de réalisation précédente, les encoches 1550 forment un logement apte à recevoir le cadre 1610 dans lequel les agrafes 301' sont encastrées. La forme des encoches 1550 est également complémentaire de la forme des rails 1611, 1612 formant le cadre 1610, de sorte que le cadre 1610 est mise en place dans les encoches 1550 simplement par emboîtement.

Dans cette variante de réalisation, chacun des rails 1611, 1612 du cadre 1610 est maintenu dans une encoche 1550 du poinçon 1520 par exemple par un assemblage à froid utilisant ou non des piges, par des moyens de vissage, ou encore par d'autres moyens classique de maintien.

De façon similaire à la variante précédente, les agrafes 301' comportant la forme complémentaire de l'empreinte 1410 de la matrice 1540, le positionnement du cadre 1610 se réalise simplement et permet donc d'obtenir un dépôt de matière métallique épousant la forme complexe du poinçon 1520 comportant deux courbures selon deux plans distincts.

La cinquième étape 1250 du procédé de réalisation 1200, illustrée à la figure 8, est une étape de pressage isostatique à chaud (HIP pour Hot Isostatic Pressing en langue anglaise) de l'empilement formé par les différentes couches d'agrafes 301', 1401' positionnées dans l'outillage de forme 1400, 1500.

Le pressage isostatique à chaud est un procédé de fabrication très utilisé et connu pour réduire la porosité des métaux et influer sur la densité de nombreux matériaux par exemple sous forme de poudre pré-compacté. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce massive 1430.

La pièce massive 1430 résultant de l'étape de pressage isostatique comporte les profils interne et externe du renfort métallique 30. La pièce massive 1430 est ensuite démoulée de l'outillage 1400, 1500.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence de molécules d'oxygène dans l'outillage et au niveau de la structure fibreuse, lors de l'étape de pressage isostatique du titane.

Selon un autre exemple de réalisation, le pressage à chaud peut également être un procédé de forgeage isotherme sous presse dans une enceinte sous vide.

L'outillage 1400, 1500 est réalisé dans un alliage mécanique dit superalliage ou alliage à haute performance.

Les rails 1611, 1711 et 1612, 1712 du cadre 1610, 1710 peuvent être réalisés dans la même matière que les agrafes 301', 1401' (i.e. en titane), ou encore dans un alliage mécanique identique à l'outillage de forme. Si les rails 1611, 1711 et 1612, 1712 du cadre 1610, 1710 sont en titane, l'étape 1250 de pressage isostatique va compacter les rails 1611, 1711 et 1612, 1712 du cadre 1610, 1710 en même temps que les agrafes 302, 1401' de façon à former une pièce massive comportant deux épaulements massifs. Dans cet exemple de réalisation, une opération supplémentaire de reprise sera nécessaire afin d'araser, par exemple par usinage, le surplus de matière apporté les rails 1611, 1711 et 1612, 1712.

L'étape 1250 de pressage isostatique peut comporter préalablement une étape de nettoyage, de dégraissage et/ou d'une attaque chimique des agrafes métalliques 301', 1401' de façon à supprimer les impuretés résiduelles des différentes couches d'agrafes. Avantageusement, l'étape de nettoyage des impuretés est réalisée par trempage de l'ensemble des agrafes 301', 1401' positionnées sur le cadre 1610, 1710 dans un bain d'agent nettoyant ou d'agent chimique avant son positionnement dans l'outillage de forme 1400, 1500.

Dans le cadre de fabrication d'un renfort métallique creux, le procédé selon l'invention peut comporter une étape supplémentaire d'attaque chimique de l'insert, introduit entre les différentes couches d'agrafes 301', 1401', et faisant partie intégrante de la pièce massive 1430 compactée. L'attaque chimique est réalisée au moyen d'un agent chimique apte à attaquer le matériau dans lequel l'insert est réalisé. L'attaque chimique de l'insert fugitif permet de dissoudre l'insert fugitif de sorte que l'espace libéré par l'insert dissout forme la cavité interne du renfort métallique creux. Avantageusement, l'étape d'attaque chimique est réalisée par trempage de la pièce massive 1430 dans un bain comportant l'agent chimique apte à dissoudre l'insert. L'agent chimique est par exemple un acide ou une base.

Avantageusement, l'agent chimique est apte à dissoudre le cuivre, le quartz ou encore la silice.

### DESCRIPTION DÉTAILLÉE D'UN TROISIEME MODE DE RÉALISATION

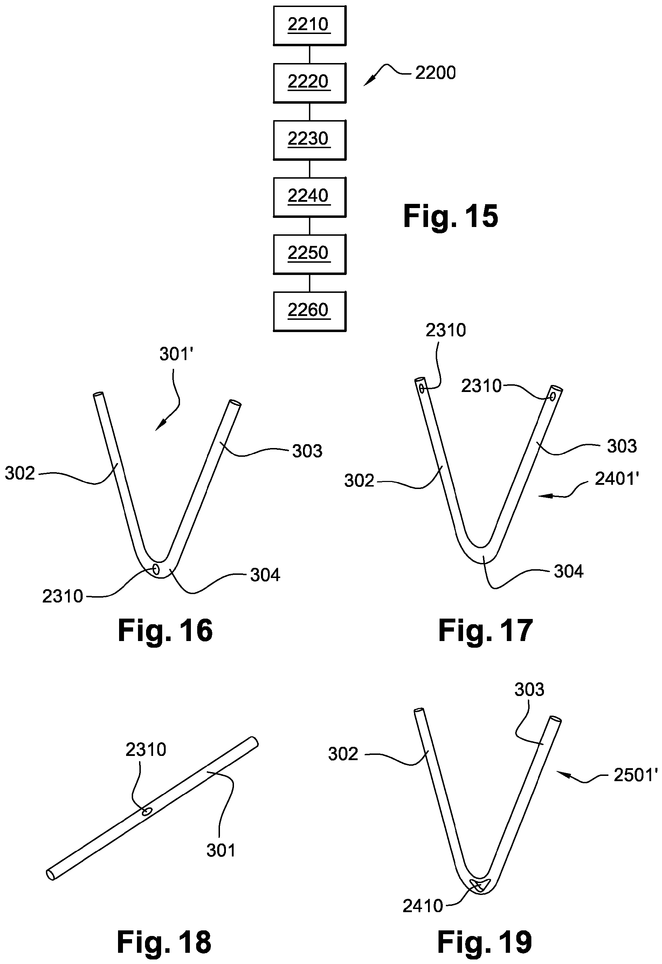

La figure 15 représente un schéma synoptique illustrant les principales étapes d'un procédé de réalisation 2200 d'une pièce métallique permettant de réaliser par exemple un renfort structurel métallique 30 de bord d'attaque d'aube 10, tel qu'illustré aux figures 1 et 2.

La première étape 2210 du procédé de réalisation 2200 est une étape de découpe d'une pluralité de tronçon de fils métalliques 301 à partir d'un fil métallique continu par exemple issu d'une filière, dont chaque longueur de tronçon 301 est déterminée en fonction de la pièce finale à réaliser. Des tronçons métalliques 301 ainsi découpés sont illustrés à la figure 4.

Chaque tronçon métallique 301 peut donc avoir une longueur spécifique en fonction de la partie du renfort métallique 30 qu'il représente, la longueur de recouvrement des flancs 35, 37 du renfort 30 variant selon la deuxième direction 20 entre le pied 22 et le sommet 24 de l'aube.

Le diamètre des tronçons métalliques 301 peut varier en fonction des besoins de l'utilisateur, et de l'épaisseur matière nécessaire pour la réalisation de la pièce. La détermination du diamètre des tronçons est réalisée en fonction d'un compromis entre souplesse et épaisseur matière nécessaire dans l'outillage.

Le tronçon métallique est typiquement formé à partir d'un fil métallique de section circulaire mais peut tout aussi bien être formé à partir d'un profil métallique de section carrée, rectangulaire, hexagonale, etc.

La deuxième étape 2220 du procédé de fabrication 2200 est une étape de formage à froid ou de mise en forme des tronçons métalliques 301 découpés lors de la première étape 2210. Cette deuxième étape est illustrée à la figure 5.

Cette deuxième étape 2220 permet la mise en forme à froid (i.e. à température ambiante) de chaque tronçon métallique 301 rectiligne par déformation plastique. Cette étape permet donc d'obtenir un tronçon métallique préformé 301', appelé agrafe par la suite, dont la géométrie est déterminée en fonction de la pièce finale à réaliser et notamment en fonction de la forme de l'outillage de compaction servant à la réalisation de la pièce finale.

Les agrafes 301' sont réalisées par déformation des tronçons métalliques rectilignes 301 au moyen d'un outillage simple qu'il est possible d'actionner manuellement, la déformation individuelle de chaque tronçon ne nécessitant pas des moyens hydrauliques conséquent pour réaliser la déformation du tronçon métallique 301. Avantageusement, l'outillage de déformation est un outillage classique de déformation qu'il est possible d'automatiser et/ou de calibrer tant au niveau de la forme finale des agrafes métalliques 301' qu'en force de pression, en fonction des besoins de l'utilisateur.

Ainsi, les agrafes 301' peuvent être formées de façon individuelle ou par paquet composé d'une pluralité de tronçons métalliques 301.

L'étape 2220 de déformation des tronçons permet ainsi de passer d'un tronçon métallique 301 de forme rectiligne à un tronçon métallique préformé formant une agrafe 301', comportant deux branches 302 et 303 sensiblement rectilignes jointes entre-elles à l'une de leur extrémité par une partie du fil métallique formant une zone de jonction 304 ayant subi au moins une déformation. Les longueurs des branches 302 et 303 peuvent être différentes pour une même agrafe 301'. Le tronçon métallique 301 peut être aussi entièrement ou partiellement écrasé (par exemple pour une restriction d'épaisseur locale) lors de l'étape de déformation.

Dans le cadre de la réalisation d'un renfort métallique d'aube de turbomachine, les agrafes 301' sont avantageusement en forme de U ou de V.

Les agrafes 301' sont réalisées à partir de tronçons de fils métalliques d'une épaisseur variant sensiblement de 0,1mm à 5mm.

Selon une variante de réalisation de l'invention, l'étape 2220 de formage à froid peut être précédée par une opération supplémentaire consistant à étirer une partie de la matière de chaque tronçon métallique rectiligne 301 pour réaliser une diminution du diamètre du tronçon métallique et donc créer une surépaisseur localisée. La diminution de diamètre est réalisée par exemple par étirement des extrémités du tronçon tout en bloquant la partie de la matière du tronçon où l'on souhaite créer une surépaisseur. L'étirement de matière est réalisé aussi à bien à chaud (i.e. avec un dispositif apte à chauffer la matière) qu'à froid (i.e. à température ambiante).

Cette surépaisseur locale de matière a pour avantage de faciliter l'étape suivante de perçage du procédé de réalisation 2200 selon l'invention. Selon une variante de réalisation, l'opération consistant à étirer une partie de la matière peut également intervenir à la suite de l'étape de formage à froid. Dans cette variante, la diminution de matière est obtenue par étirement des branches 302, 303 de l'agrafe métallique 301'.

Avantageusement, la surépaisseur de matière est réalisée sensiblement au centre du fil par rapport à ses deux extrémités. La jonction entre la surépaisseur centrale et les extrémités du fil est progressive, c'est-à-dire que le fil métallique comporte une épaisseur constante au niveau des deux zones d'extrémité et au niveau de la zone centrale présentant une surépaisseur, et une épaisseur variable entre la zone centrale et l'une des zones d'extrémité.

Selon une autre variante de réalisation, la surépaisseur de matière est réalisée par usinage du fil métallique rectiligne 301 ou encore par attache chimique du fil métallique rectiligne au niveau de ses extrémités.

La troisième étape 2230 du procédé de réalisation 2200 est une étape de perçage de ladite pluralité d'agrafes métalliques 301' de manière à réaliser au moins un orifice traversant 2310. L'étape de perçage est réalisée par un procédé de découpage laser ou par un autre type de procédé connu permettant de réaliser des orifices traversant 2310 dans une agrafe métallique 301' de faible épaisseur (i.e. de l'ordre de quelques millimètres d'épaisseur).

Selon un premier exemple de réalisation illustré à la figure 16, le perçage de l'agrafe 301' est réalisé au niveau de la zone de jonction 304 ayant subi au moins une déformation. Selon une variante de réalisation illustrée à la figure 17, le perçage est réalisé au niveau de chacune des extrémités des branches 302 et 303 de l'agrafe 2401'. L'agrafe 2401' illustrée à la figure 17 est similaire à l'agrafe 301' détaillée précédemment à l'exception du positionnement des orifices traversant 2310.

Selon une autre variante de réalisation (non représentée), les agrafes peuvent comporter une pluralité d'orifices traversant 2310 au niveau de la zone de jonction 304 et/ou au niveau des branches 302, 303.

Selon un second exemple de réalisation illustré aux figures 18 et 19, cette étape de perçage peut être réalisée antérieurement à l'étape de mise en forme à froid des agrafes. L'inversion de l'ordre de déroulement des étapes peut être intéressante si l'on souhaite, par exemple, profiter de la déformation du fil 301 pour apporter, de façon simultanée, une déformation à l'orifice traversant. Ainsi par exemple, un orifice circulaire 2310 réalisé au niveau de la partie centrale du fil métallique 301 qui servira à former la zone de jonction 304 de l'agrafe 301', antérieurement à l'étape de mise en forme, sera également déformé lors de la déformation de l'agrafe et deviendra une cavité 2410 plus large que l'orifice circulaire 2310 initial avec une forme s'approchant de la forme d'un U ou d'un V.

La quatrième étape 2240 du procédé de réalisation 2200 est une étape d'assemblage de la pluralité d'agrafes 301' de façon à réaliser une structure métallique souple 2320a, 2320b sous la forme d'une guirlande d'agrafes métalliques 301' ou encore de collier constitué par une pluralité d'agrafes métalliques 301'.

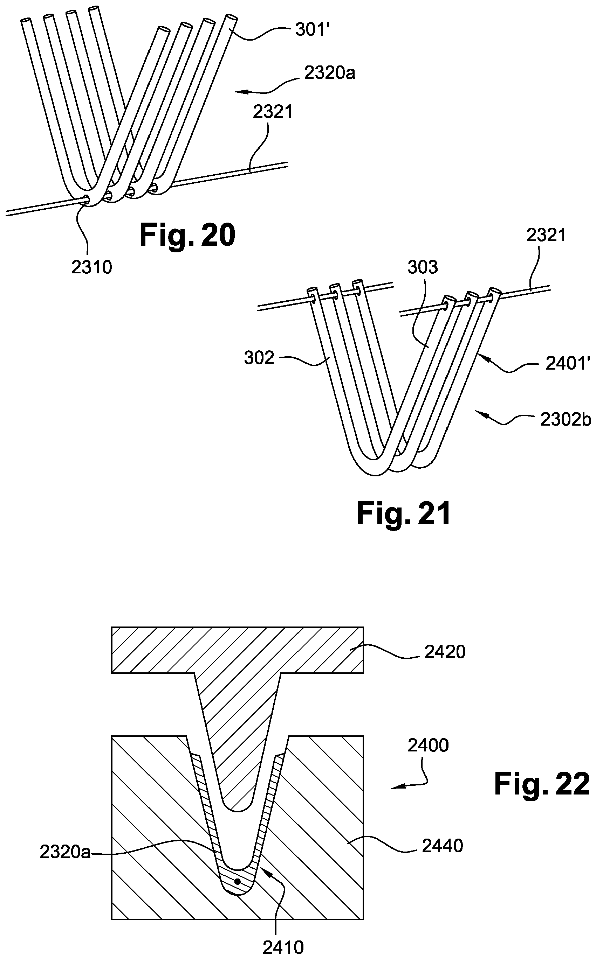

Selon une première variante de réalisation de perçage de la figure 16, la structure métallique 2320a est formée par enfilement d'au moins un fil métallique 321 à l'intérieur de l'orifice 310 de chaque agrafe métallique 301' parmi la pluralité d'agrafes. La structure métallique 2320a selon cette variante de réalisation est particulièrement illustrée à la figure 20.

Selon la deuxième variante de réalisation de perçage de la figure 17, la structure métallique 2320b est formée par l'enfilement d'au moins un fil métallique 2321 à l'intérieur de chacun des orifices 2310 situés au niveau de chaque extrémité de chaque branche 302, 303 de la pluralité d'agrafes 2401'. Cette deuxième variante de réalisation de la structure métallique 2320b est illustrée à la figure 21.

Un second exemple de réalisation, illustré à la figure 19, est avantageusement utilisé pour l'insertion d'une pluralité de fils métalliques 2321 à l'intérieur de la cavité 2410.

La structure métallique 2320a, 2320b est ainsi formée par des fils métalliques 2321 réalisant une armature métallique et par les agrafes métalliques 301', 2401' suspendues aux fils métalliques 2321. Les fils métalliques 2321 utilisés pour réaliser la structure métallique 2320a, 2320b sont préférentiellement des fils à base de titane dans le cadre de réalisation d'un renfort métallique d'aube de turbomachine. Toutefois, les fils métalliques 2321 peuvent également être des fils enduits de Bore (fil SiC-Bore) ou encore des fils en Carbure de Silicium (fil SiC-SiC) ou encore des fils composites métallique-céramique à base de carbure de silicium et de titane (SiC-Ti). Selon la nature du fil métallique 2321 utilisé, le fil métallique peut réaliser de façon ponctuelle et localisée des renforts structurels dans la pièce à réaliser.

Ainsi, de façon avantageuse, la structure métallique 2320a, 2320b peut comporter en plus des orifices 2310 servant à la réalisation de la structure métallique 2320a, 2320b, des orifices secondaires repartis spécifiquement sur la surface des agrafes métalliques 301', 2401' aptes à recevoir des fils métalliques spécifiques qui deviendront des renforts structurels dans la pièce finale réalisée.

Les fils métalliques 2321 réalisant l'armature métallique de la structure métallique 2320a, 2320b ainsi que des renforts localisés dans la structure métallique 2320a, 2320b ont des diamètres inférieurs au diamètre des agrafes métalliques 301', 2401'. De façon avantageuse, les fils métalliques 2321 ont un diamètre sensiblement compris entre 0,1 mm et 1 mm.

Les fils métalliques 2321 peuvent également être remplacés par des câbles métalliques constitués par une pluralité de brins métalliques torsadés, tressés ou enroulés en hélice autour de l'axe longitudinal du câble. Avantageusement, chaque brin métallique formant le câble comporte un diamètre inférieur à 0,1 mm. A titre d'exemple, les câbles métalliques peuvent comporter entre 20 et 30 brins enroulés. L'utilisation de câbles métalliques formés par une pluralité de brins métalliques enroulés permet ainsi d'obtenir un câble de section importante souple et déformable manuellement à froid (i.e par exemple à la température ambiante) et donc permettre le positionnement aisé des différentes agrafes 301', 401'.

Les agrafes métalliques 301' et 2401' constituant des différentes couches sont principalement réalisées à partir de fils métalliques à base de titane. Toutefois, il est également possible d'incorporer, parmi les agrafes 301', 2401' en titane de la structure métallique 2320a, 2320b des agrafes métalliques à base de carbure de silicium et de titane (SiC-Ti), de fils enduits de Bore (fil SiC-Bore) ou de Carbure de Silicium (fil SiC-SiC) dans la mesure où le rayon de courbure des agrafes 301', 2401' autorise une déformation de ces fils, dits « fils composites », sans atteindre leur limite de rupture.

La cinquième étape 2250 du procédé de réalisation 2200 est une étape de positionnement de la structure métallique 2320a, 2320b comportant la pluralité d'agrafes 301', 2401' dans un outillage de forme 2400.

L'outillage 2400 comporte une matrice 2440 présentant une empreinte 2410 correspondant à la forme externe finale du renfort métallique 30 et un poinçon 2420 correspondant à la forme interne finale du renfort métallique de bord d'attaque.

Un exemple de réalisation de cette étape 2250 du procédé de réalisation 2200 est illustré à la figure 22. Selon cet exemple de réalisation, la structure métallique 2320a, est positionnée dans la matrice 2440 de l'outillage de forme 2400. Selon un autre exemple de réalisation (non représentée), la structure métallique 2320a, 2320b peut tout aussi bien être positionnée sur le poinçon 2420.

Les agrafes 301', 2401' comportant la forme complémentaire de l'empreinte 2410, le positionnement de la structure métallique 2320a, 2320b souple se réalise simplement et permet donc de réaliser facilement un dépôt de matière métallique sur une empreinte 2410 de forme complexe comportant deux courbures selon deux plans distincts.

La sixième étape 2260 du procédé de réalisation 2200, illustrée à la figure 8, est une étape de pressage à chaud de l'empilement formé par les différentes couches d'agrafes 301', 2401' positionnées dans l'outillage de forme 2400.

Selon un exemple de réalisation avantageux, le pressage à chaud est un pressage isostatique (HIP pour Hot Isostatic Pressing en langue anglaise).

Le pressage isostatique à chaud est un procédé de fabrication très utilisé et connu pour réduire la porosité des métaux et influer sur la densité de nombreux matériaux par exemple sous forme de poudre pré-compacté. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce massive 2430.

La pièce massive 2430 résultant de l'étape de pressage isostatique comporte les profils interne et externe du renfort métallique 30. La pièce massive 2430 est ensuite démoulée de l'outillage 2400.

L'étape de pressage isostatique est réalisée sous vide, avantageusement sous vide secondaire, soit dans un outillage soudé dans lequel le vide secondaire est réalisé, soit sous sac à l'autoclave ; le choix du procédé dépendant du nombre de pièce à produire. Le vide secondaire permet d'éviter la présence de molécules d'oxygène dans l'outillage et au niveau de la structure fibreuse, lors de l'étape de pressage isostatique du titane.

Selon un autre exemple de réalisation, le pressage à chaud peut également être un procédé de forgeage isotherme sous presse dans une enceinte sous vide.

L'outillage 2400 est réalisé dans un alliage mécanique dit superalliage ou alliage à haute performance.

L'étape 2260 de pressage à chaud peut comporter préalablement une étape de nettoyage, de dégraissage et/ou d'une attaque chimique des agrafes métalliques 301', 2401' de la structure métallique 2320a, 2320b de façon à supprimer les impuretés résiduelles dans la structure métallique 2320a, 2320b. Avantageusement, l'étape de nettoyage des impuretés est réalisée par trempage de la structure métallique 2320a, 2320b dans un bain d'agent nettoyant ou d'agent chimique avant son positionnement dans l'outillage de forme 2400.

### DESCRIPTION DÉTAILLÉE D'UN QUATRIEME MODE DE RÉALISATION

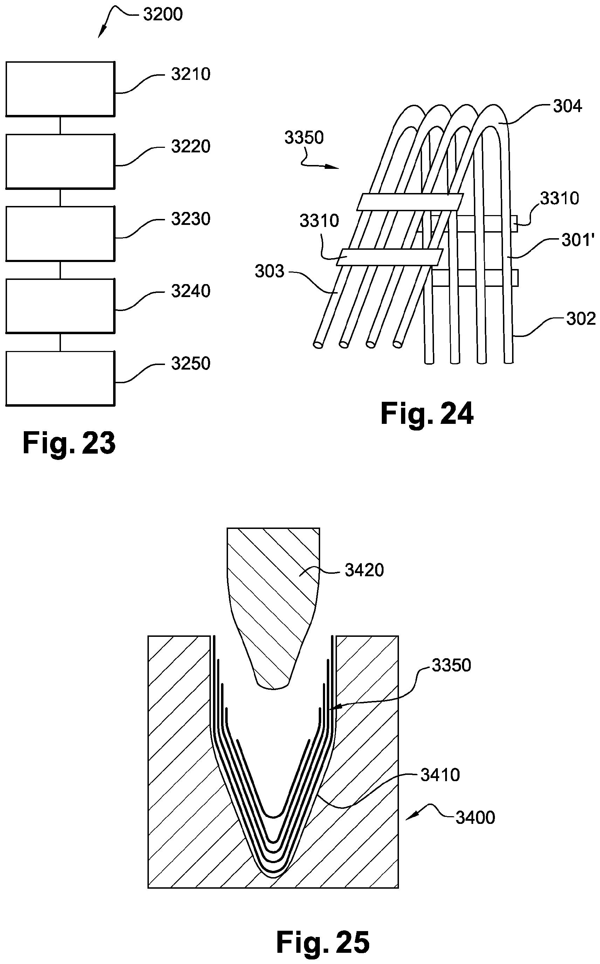

La figure 23 représente un schéma synoptique illustrant les principales étapes d'un procédé de réalisation 3200 d'une pièce métallique permettant de réaliser par exemple un renfort structurel métallique 30 de bord d'attaque d'aube 10 tel qu'illustré aux figures 1 et 2.

La première étape 3210 du procédé de réalisation 3200 est une étape de découpe d'une pluralité de tronçons métalliques 301 à partir d'un fil métallique continu par exemple issu d'une filière, dont chaque longueur de tronçon 301 est déterminée en fonction de la pièce finale à réaliser. Des tronçons métalliques 301 ainsi découpés sont illustrés à la figure 4.

Chaque tronçon métallique 301 peut donc avoir une longueur spécifique en fonction de la partie du renfort métallique 30 qu'il représente, la longueur de recouvrement des flancs 35, 37 du renfort 30 variant selon la deuxième direction 20 entre le pied 22 et le sommet 24 de l'aube.

Le diamètre des tronçons métalliques 301 peut varier en fonction des besoins de l'utilisateur, et de l'épaisseur matière nécessaire pour la réalisation de la pièce. La détermination du diamètre des tronçons est réalisée en fonction d'un compromis entre souplesse et épaisseur matière nécessaire dans l'outillage.

Le tronçon métallique sensiblement rectiligne est typiquement formé à partir d'un fil métallique de section circulaire mais peut tout aussi bien être formé à partir d'un profil métallique de section carrée, rectangulaire, hexagonale, etc.

La deuxième étape 3220 du procédé de fabrication 3200 est une étape de formage à froid ou de mise en forme des tronçons métalliques 301 découpées lors de la première étape 3210. Cette deuxième étape est illustrée à la figure 5.

Cette deuxième étape 3220 permet la mise en forme à froid (i.e. à température ambiante) de chaque tronçon métallique 301 rectiligne, par déformation plastique, de façon à obtenir un tronçon métallique préformé 301', appelé agrafe, dont la géométrie est déterminée en fonction de la pièce finale à réaliser et notamment en fonction de la forme de l'outillage de compaction servant à la réalisation de la pièce finale.

Les agrafes 301' sont réalisées par déformation des tronçons métalliques rectilignes 301 au moyen d'un outillage simple qu'il est possible d'actionner manuellement, la déformation individuelle de chaque tronçon ne nécessitant pas des moyens hydrauliques conséquent pour réaliser la déformation. Avantageusement, l'outillage de déformation est un outillage classique de déformation qu'il est possible d'automatiser et de calibrer tant au niveau de la forme finale des agrafes métalliques 301' qu'en force de pression en fonction des besoins de l'utilisateur.

Ainsi, les agrafes 301' peuvent être formées de façon individuelle ou par groupe d'une pluralité de tronçons métalliques 301.

L'étape 3220 de déformation des tronçons permet ainsi de passer d'un tronçon métallique 301 de forme rectiligne à un tronçon métallique 301' préformé, de la forme d'une agrafe, comportant deux branches 302 et 303 sensiblement rectilignes reliées entre-elles par un élément de jonction 304 ayant subi au moins une déformation. Les longueurs des branches 302 et 303 peuvent être différentes pour une même agrafe. Le tronçon métallique 301 peut être aussi entièrement ou partiellement écrasé (par exemple pour une restriction d'épaisseur locale).

Dans le cadre de la réalisation d'un renfort métallique d'aube de turbomachine, les agrafes 301' sont avantageusement en forme de U ou de V.

Les tronçons métalliques 301 permettant la réalisation des agrafes 301' sont principalement des fils à base de titane et ont sensiblement une épaisseur variant entre 0,1mm et 5mm.

La troisième étape 3230 du procédé de réalisation 3200, illustrée à la figure 24, est une étape de solidarisation d'une pluralité d'agrafes de façon à former une structure métallique tridimensionnelle 3350. Avantageusement, la préforme métallique de la pièce à réaliser positionnée dans l'outillage de forme est constituée par une pluralité de structures métalliques tridimensionnelles 3350, chacune formant une portion de la préforme métallique.

La troisième étape 3230 de solidarisation peut comporter une sous-étape préalable de positionnement des agrafes 301' sur un gabarit de forme (non représenté) en vue de faciliter l'opération de solidarisation.

Le gabarit de forme présente avantageusement une géométrie externe apte à épouser la forme interne des agrafes 301' formées lors de l'étape précédente.

Dans le cas de réalisation d'un renfort métallique d'aube de turbomachine, le gabarit a avantageusement la forme externe de l'aube (i.e. la forme interne finale du renfort métallique).

Le gabarit peut également présenter des encoches sur la surface extérieure du gabarit apte à définir les positions des différentes agrafes et à réaliser un pré-maintien des agrafes en position facilitant par conséquent les différentes manipulations du gabarit ou encore l'opération de solidarisation des agrafes 301'.

L'espace séparant deux agrafes 301' (i.e. le pas de positionnement des agrafes) est défini en fonction de l'épaisseur de l'agrafe 301' et des besoins matière de la pièce à réaliser.

Les agrafes 301' sont solidarisées par soudage ou par collage de bandes métalliques 3310, dites clinquants, sur les branches 302, 303 des agrafes 301' de sorte que l'assemblage des clinquants 3310 sur les agrafes 301' permet de former une structure métallique 350 préformée et non tissée (i.e. n'utilisant pas de métier à tisser).

Les clinquants 3310 sont découpés à partir d'au moins une feuille ou d'un feuillard métallique de faible épaisseur, c'est-à-dire de l'ordre de quelques centièmes de millimètres d'épaisseur.

Lorsque la structure métallique 3350 est réalisée en titane, le collage des clinquants métalliques 3310 en titane sur les agrafes 301' en titane peut être réalisé simplement par échauffement des agrafes métalliques 301' et des clinquants 3310 superposés sous une atmosphère faiblement pressurisée.

La soudure des clinquants 3310 sur les agrafes 301' est réalisée par des moyens de soudure connus permettant de souder des faibles épaisseurs de titane. Ainsi, à titre d'exemple, les agrafes 301' et les clinquants 3310 sont assemblés par des points de soudure par un procédé de soudage électrique à points.

Selon un autre exemple de réalisation, le soudage ou le collage des agrafes 301' est réalisé par un ou une pluralité de fils métalliques présentant un diamètre inférieur au diamètre des agrafes métalliques 301' afin de présenter une certaine souplesse et ainsi faciliter l'assemblage des différentes agrafes métalliques 301'. Ainsi à titre d'exemple, les fils métalliques permettant la réalisation de la structure métallique 3350 ont un diamètre variant sensiblement entre 0,1 mm et 1 mm. Ces fils métalliques sont avantageusement en titane ; toutefois, il est également possible d'utiliser des fils composites à base de carbure de silicium et enduits de titane (SiC-Ti), de fils à base de carbure de silicium et enduits de Bore (fil SiC-Bore) ou encore des fils en Carbure de Silicium (fil SiC-SiC).

Les tronçons métalliques 301 permettant la réalisation des agrafes 301' sont principalement des fils à base de titane. Toutefois, il est possible d'incorporer dans la structure métallique 3350 parmi les agrafes en titane des agrafes métalliques à base de carbure de silicium et de titane (SiC-Ti), de fils enduits de Bore (fil SiC-Bore) ou des agrafes non métalliques en Carbure de Silicium (fil SiC-SiC), dans la mesure où le rayon de courbure des tronçons 301 autorise la déformation de ces fils « composites » sans les casser, de façon à créer de façon ponctuelle et localisée des renforts structurels dans la pièce à réaliser.

La quatrième étape 3240 du procédé de réalisation 3200 est une étape de positionnement des différentes structures métalliques tridimensionnelles 3350 réalisées lors de l'étape précédente dans un outillage de forme. Les différentes structures métalliques tridimensionnelles 3350 mises bout à bout permettent de former une préforme de la pièce à réaliser qui est facilement positionnable dans un outillage de forme complexe.

L'outillage de forme 3400 comporte une empreinte 3410 (matrice) correspondant à la forme externe finale du renfort métallique 30 et une contre-empreinte 3420, 3520 (poinçon) correspondant à la forme interne finale du renfort métallique de bord d'attaque.

Selon un premier exemple de réalisation illustré à la figure 25, l'étape de positionnement 3240 est réalisée par positionnement des structures métalliques tridimensionnelles dans l'empreinte 3410 de l'outillage de forme 3400. Le positionnement est réalisé par positionnement successif des structures métalliques 3350 sur toute la longueur de l'empreinte 3410 (i.e. selon l'axe longitudinal de l'empreinte). Chaque structure métallique 3350 forme une portion de la préforme complète, chacune des structures métalliques comportant une pluralité d'agrafes 301'.

Les agrafes 301', et par conséquent la structure métallique tridimensionnelle 3350, comportant la forme complémentaire de l'empreinte 3410, l'étape de positionnement se réalise simplement par emboîtement des différentes sections (i.e. les différentes structures métalliques tridimensionnelles) formant la préforme. La division de la préforme en une pluralité de sections permet donc de réaliser un dépôt de matière métallique épousant une forme complexe d'une empreinte 3410 comportant deux courbures selon deux plans distincts.

Lors de cette étape de positionnement 3240, plusieurs couches de structures métalliques 3350, telles qu'illustrées à la figure 24, peuvent être superposées afin de respecter les épaisseurs de matière nécessaires à la réalisation de la pièce qui peuvent bien entendu varier.

Bien entendu, la forme des agrafes 301' et la longueur des branches 302, 303, et par conséquent la forme des structures métalliques 3350 des différentes couches, peuvent également être ajustées en fonction des besoins de matière nécessaires à la réalisation du renfort métallique 30.

Afin d'améliorer, le maintien des structures métalliques 3350 positionnées dans l'empreinte, les agrafes peuvent avantageusement comporter deux épaulements réalisés lors de l'étape 3220 de formage à froid au niveau de chaque extrémités libres des agrafes en forme de V ou de U. Les épaulements sont réalisés par pliage d'une partie de l'extrémité de chaque branche de façon à réaliser deux parties aptes à former des appuis aidant le positionnement des agrafes et leur maintien dans l'empreinte.

Selon un autre exemple de réalisation, les extrémités, aptes à former les épaulements, peuvent également être déformées de sorte que les épaulements ont la forme de méplats comportant au moins une surface plane apte à venir en appui sur l'empreinte.

A cet effet, l'outillage de forme est agencé de façon à proposer au niveau de l'empreinte un décrochement de matière permettant aux structures métalliques 3350 de prendre appuis dans l'empreinte. De façon complémentaire, le poinçon de l'outillage de forme comporte deux épaulements de part et d'autre de la forme en V du poinçon aptes à venir se positionner dans les décrochements de matière agencés dans l'empreinte lors de la fermeture de l'outillage.

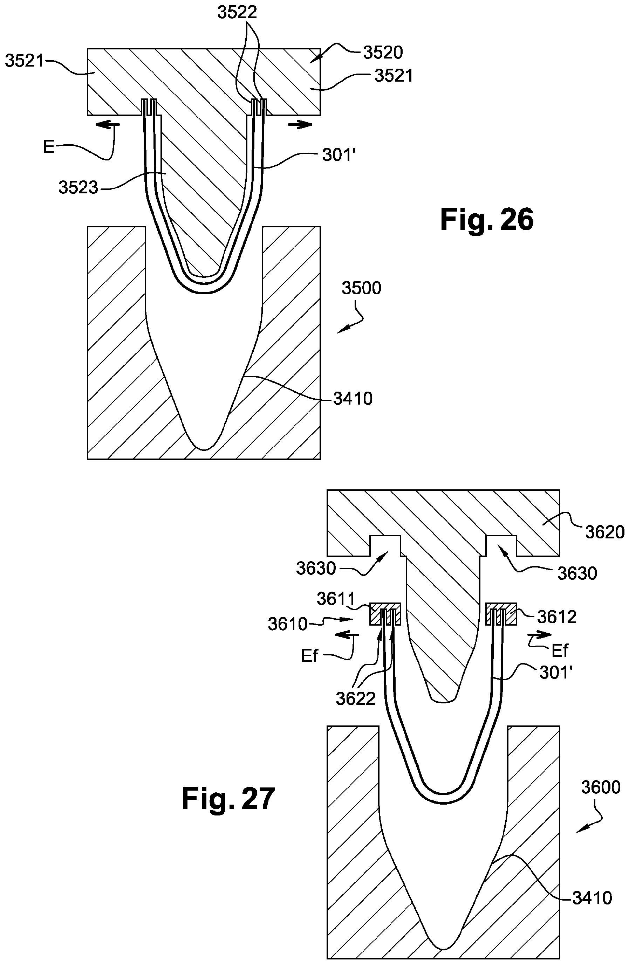

Selon un deuxième exemple de réalisation illustré à la figure 26, l'étape de positionnement 3240 est réalisée par positionnement des structures métalliques tridimensionnelles 3350, constituant différentes sections de la préforme de la pièce à réaliser, sur le poinçon 3520 de l'outillage de forme 3500.

A cet effet, l'outillage de forme 3500 comporte une empreinte 3410 (matrice) similaire au premier exemple de réalisation, et une contre-empreinte 3520 (poinçon) correspondant à la forme interne finale du renfort métallique de bord d'attaque et comportant dans sa partie supérieure deux épaulements 3521 de part et d'autre de la forme en V 3523 correspondant à la forme interne finale du renfort métallique. La face des épaulements 3521, en regard vers l'intérieur de l'outillage 500, comporte des moyens d'encastrement 3522, répartis sur toute la longueur du poinçon 3520 (i.e. le long de l'axe longitudinal du poinçon), aptes à recevoir les extrémités des branches 302, 303 des agrafes 301'. Ces moyens 3522 sont avantageusement des orifices dont le diamètre permet de recevoir chaque branche 302, 303 des agrafes 301', ou des rainures s'étendant sur toute la longueur du poinçon, ou encore des rainures dont la longueur correspondant sensiblement à la longueur des structures métalliques tridimensionnelles 3350.

Selon ce second exemple de réalisation, le positionnement des structures métalliques 3350 sur le poinçon 3520 est réalisé par positionnement successif de structures métalliques 3350 et par encastrement des branches 302, 303 des agrafes 301' de chaque structure 3350 dans les moyens d'encastrement 3522 situés de part et d'autre de la forme en V 3523 du poinçon 3520. Le maintien des structures métalliques tridimensionnelles 3350 en position est réalisé en utilisant la propriété élastique des branches 302, 303 des agrafes 301' qui exercent une pression contre les parois des moyens d'encastrement 3522 par retour élastique.

De façon avantageuse et pour garantir un bon maintien en position des agrafes 301' constituant la structure métallique 3350, la mise en forme des agrafes lors de la deuxième étape 220 est réalisée afin d'obtenir des agrafes 301' dont l'écartement, en position de repos (i.e. sans contrainte extérieure), entre les deux branches 302, 303 est plus grand ou plus petit que l'écartement entre les moyens d'encastrement 3522 situés de part et d'autre de la forme en V 3523 du poinçon 3520.

Ainsi, lorsque l'écartement des branches 302, 303 en position de repos est supérieur à l'écartement des moyens d'encastrement 3522, les structures métalliques 3350 sont maintenues encastrées par retour élastique des branches 302, 303 qui exercent une force par retour élastique contre les parois des moyens d'encastrement 3522, selon la direction illustrée par les flèches référencées Ef, pour retrouver leur position de repos.

De façon inverse, lorsque l'écartement des branches 302, 303 en position de repos est inférieur à l'écartement des moyens d'encastrement 3522, les structures métalliques 3350 sont maintenues encastrées par retour élastique des branches 302, 303 qui exercent une force par retour élastique contre les parois des moyens d'encastrement 3522, selon la direction opposée à la direction illustrée par les flèches référencée Ef, pour retrouver leur position de repos.

Plusieurs couches d'agrafes, telles qu'illustrées à la figure 26, peuvent être superposées afin de respecter les épaisseurs de matière nécessaires à la réalisation de la pièce. La forme des structures métalliques 3350 des différentes couches peuvent également être ajustées en fonction des besoins de matière nécessaires à la réalisation du renfort métallique 30.

Selon un troisième exemple de réalisation illustré à la figure 27, l'étape de positionnement 3240 est réalisée par positionnement des structures métalliques tridimensionnelles 3350, constituant différentes sections de la préforme de la pièce à réaliser, sur un cadre 3610 formé par deux rails 3611,3 612 suivant la fibre neutre de la pièce à réaliser.

Les rails 3611, 3612 comportent des moyens d'encastrement 3622 permettant de maintenir les structures métalliques 3350 en utilisant la propriété élastique des branches 302, 303 des agrafes 301' exerçant une pression contre les parois des moyens d'encastrement 3622 par retour élastique.

Ainsi, de façon similaire à l'exemple de réalisation décrit précédemment, lorsque l'écartement des branches 302, 303 des agrafes 301' en position de repos est supérieur à l'écartement des moyens d'encastrement 3622 des rails 3611, 3612, les structures métalliques 3350 sont maintenues encastrées par retour élastique des branches 302, 303 qui exercent une force par retour élastique , selon la direction illustrée par les flèches référencées Ef, pour retrouver leur position de repos.

De façon inverse, lorsque l'écartement des branches 302, 303 en position de repos est inférieur à l'écartement des moyens d'encastrement 3622 des rails 3611, 3612, les structures métalliques 3350 sont maintenues encastrées par retour élastique des branches 302, 303 qui exercent une force par retour élastique, selon la direction opposée à la direction illustrée par les flèches référencée Ef, pour retrouver leur position de repos.

Dans cet exemple de réalisation, l'étape 3240 de positionnement comporte une sous-étape supplémentaire de positionnement du cadre 3610 dans lequel les structures métalliques tridimensionnelles 3350 sont encastrées dans le poinçon 3620 de l'outillage de forme 3600 illustré à la figure 27, le poinçon présentant à cet effet des logements 3630 en forme de rainure aptes à recevoir le cadre.

La géométrie des logements 3630 est bien évidemment dépendante et complémentaire de la géométrie des rails 3611, 3612 du cadre 3610.

Les rails 3611, 3612 du cadre 3610 sont maintenus dans les logements 3630 du poinçon par des moyens classique de maintien, tels que par exemple des piges, des moyens de vissage ou encore par ajustement à froid.

L'étape 3240 de positionnement des différents couches de structures métalliques tridimensionnelles 3350 peut également comporter une sous-étape d'insertion d'un insert entre deux couches successives de structures métalliques 3350 de manière à fournir par exemple une surépaisseur de matière locale plus conséquente ou variable, un renfort spécifique réalisé dans un matériau spécifique ou encore pour réaliser une pièce métallique creuse, telle qu'un renfort métallique creux.

A titre d'exemple, l'insert peut être un insert massif réalisé par un procédé de forgeage, d'usinage, ou par coulé. ou un insert tissé au moyen de fils métalliques par exemple avec des fils de titane et/ou des fils à base de carbure de silicium et de titane (SiC-Ti), et/ou des fils enduits de Bore (SiC-Bore), ou encore de Carbure de Silicium (SiC-SiC).

Quelle que soit la nature du matériau utilisé pour la réalisation de l'insert inséré entre les différentes couches, il est nécessaire que ce matériau soit compatible avec la nature du matériau utilisé pour la réalisation des structures métalliques 3350 et présente des propriétés permettant le formage superplastique et le soudage diffusion.

Pour la réalisation d'un renfort métallique creux (non représenté), l'insert est un insert fugitif réalisé dans un matériau différent du matériau utilisé pour la réalisation des agrafes métalliques 301'.

On entend par « insert fugitif » un insert qui n'est pas destiné à être permanant et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

L'insert fugitif est par exemple réalisé dans un matériau capable de résister à une haute température, de l'ordre de 900°C, une haute pression, de l'ordre de 1000 bar, et qui est compatible avec les matériaux des agrafes métalliques 301' de façon à ne pas créer d'impuretés ou d'oxydation.

Le matériau de l'insert fugitif doit également pouvoir être attaqué chimiquement par dissolution au moyen d'un agent chimique.

Avantageusement, l'insert fugitif est réalisé en cuivre, ou en quartz ou en silice.

La forme de l'insert fugitif incorporé dans l'empilement des couches de structures métalliques 3350 est dépendante de la forme de la cavité interne finale désirée.

La cinquième étape 3250 du procédé de réalisation 3200, illustrée à la figure 8, est une étape de pressage isostatique à chaud (HIP pour Hot Isostatic Pressing en langue anglaise) de l'empilement formé par les différentes couches d'agrafes positionnées dans l'outillage 3400, 3500, 3600.

Le pressage isostatique à chaud est un procédé de fabrication très utilisé et connu pour réduire la porosité des métaux et influer sur la densité de nombreux métaux par exemple sous forme de poudre pré-compacté. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce massive 3430.

La pièce massive 3430 résultant de l'étape de pressage isostatique comporte les profils interne et externe du renfort métallique 30. La pièce massive 3430 est ensuite démoulée de l'outillage 3400, 3500, 3600.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence d'oxygène dans l'outillage et au niveau de la structure fibreuse, lors de l'étape de pressage isostatique du titane.

Selon un autre exemple de réalisation, le pressage à chaud peut également être un procédé de forgeage isotherme sous presse dans une enceinte sous vide.

L'outillage 3400, 3500, 3600 est réalisé dans un alliage mécanique dit superalliage ou alliage à haute performance.

Selon le troisième exemple de réalisation illustré à la figure 27, les rails 3611, 3612 du cadre 3610 peuvent réalisés dans la même matière que les agrafes 301' des structures métalliques 3350 (i.e. en titane), ou encore dans un alliage mécanique identique à l'outillage de forme. Si les rails 3611, 3612 du cadre 3610 sont en titane, l'étape 3250 de pressage isostatique va compacter les rails 3611, 3612 du cadre 3610 et les différentes structures métalliques 3350 de façon à former une pièce massive comportant deux épaulements massifs. Dans cet exemple de réalisation, une opération de reprise sera nécessaire pour de supprimer, par exemple par usinage, le surplus de matière formé par les rails.

L'étape 3250 de pressage isostatique peut comporter préalablement une étape de nettoyage, de dégraissage et/ou d'une attaque chimique des structures métalliques 3350 de façon à supprimer les impuretés résiduelles des différentes couches d'agrafes.

Avantageusement, l'étape de nettoyage des impuretés est réalisée par trempage des différentes structures métalliques 3350 dans un bain d'agent nettoyant ou d'agent chimique.

Dans le cadre de fabrication d'un renfort métallique creux, le procédé selon l'invention peut comporter une étape supplémentaire d'attaque chimique de l'insert, introduit entre les différentes couches de structures métalliques 3350, et faisant partie intégrante de la pièce massive 430 compactée. L'attaque chimique est réalisée au moyen d'un agent chimique apte à attaquer le matériau dans lequel l'insert est réalisé. L'attaque chimique de l'insert fugitif permet de dissoudre l'insert fugitif de sorte que l'espace libéré par l'insert dissout forme la cavité interne du renfort métallique creux. Avantageusement, l'étape d'attaque chimique est réalisée par trempage de la pièce massive 430 dans un bain comportant l'agent chimique apte à dissoudre l'insert. L'agent chimique est par exemple un acide ou une base.

Avantageusement, l'agent chimique est apte à dissoudre le cuivre, le quartz ou encore la silice.

En association avec ces principales étapes de réalisation des différents modes de réalisation décrits, le procédé selon l'invention peut également comporter une étape de finition et de reprise par usinage de la pièce massive obtenue à la sortie de l'outillage de façon à obtenir le renfort 30. Cette étape de reprise comporte :
- une étape de reprise du profil de la base 39 du renfort 30 de façon à l'affiner et notamment du profil aérodynamique du bord d'attaque 31 ;
- une étape de reprise des flancs 35, 37 ; cette étape consistant notamment au détourage des flancs 35, 37 et à l'amincissement des flancs intrados et extrados ;
- une étape de finition permettant d'obtenir l'état de surface requis.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

La présente invention a été principalement décrite avec l'utilisation de tronçons métalliques à base de titane ; toutefois, le procédé de réalisation est également applicable avec n'importe quelle matière métallique présentant des propriétés permettant le formage superplastique et/ou le soudage diffusion.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine ou encore à la réalisation d'un renfort métallique d'hélice en composite ou métallique.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de réalisation (200) d'une pièce métallique (30), telle qu'un renfort métallique d'aube de turbomachine, comportant successivement :
- une étape (230) de positionnement d'une pluralité d'agrafes métalliques (301') dans un outillage de forme (400, 500) présentant une matrice (410) et un poinçon (420, 520), lesdites agrafes métalliques (301') étant des tronçons de fils métalliques, de forme rectiligne pliés en forme de U ou de V, ne constituant pas une structure tissée ;
- une étape (240) de pressage isostatique à chaud de ladite pluralité d'agrafes métalliques (301') provoquant l'agglomération desdites agrafes métalliques (301') de manière à obtenir une pièce massive (430).

2. Procédé de réalisation (200) d'une pièce métallique (30) selon la revendication 1 **caractérisé en ce que** ledit procédé est un procédé de réalisation d'un renfort métallique de bord d'attaque, ou de bord de fuite, d'aube de turbomachine ou d'un renfort métallique d'hélice de sorte que ladite pièce massive obtenue lors de ladite étape (240) de pressage isostatique est un renfort métallique.

3. Procédé de réalisation (200) d'une pièce métallique (30) selon l'une des revendications 1 à 2 **caractérisé en ce que** ladite étape (230) de positionnement de ladite pluralité d'agrafes (301') est réalisée par le positionnement agrafe par agrafe dans la matrice (410) dudit outillage de forme (400, 500) ou par le positionnement agrafe par agrafe sur le poinçon (520) dudit outillage de forme (500).

4. Procédé de réalisation (200) d'une pièce métallique (30) selon la revendication 3 **caractérisé en ce que** ladite étape (230) de positionnement de ladite pluralité d'agrafes (301') est réalisée par l'encastrement des branches (302, 303) desdites agrafes (301') dans des orifices (522) aménagés dans ledit poinçon (520), ledit encastrement étant réalisé par déformation élastique desdites branches (302, 303).

5. Procédé de réalisation (200) d'une pièce métallique (30) selon l'une des revendications 1 à 2 **caractérisé en ce que** ladite étape (230) de positionnement de ladite pluralité d'agrafes (301') comporte une première sous-étape de pré-positionnement agrafe par agrafe sur un gabarit de forme et une deuxième sous-étape de positionnement de ladite pluralité d'agrafes (301'), pré-positionnées sur ledit gabarit de forme, dans ledit outillage de forme (400, 500).

6. Procédé de réalisation (1200) d'une pièce métallique (30) selon l'une des revendications 1 à 2 **caractérisé en ce que** l'étape de positionnement de ladite pluralité d'agrafes comporte une première sous-étape de pré-positionnement de ladite pluralité d'agrafes métallique (301', 1401') sur un cadre amovible (1610, 1710), de sorte que lesdites agrafes (301', 1401') sont suspendues au dit cadre amovible (1610, 1710) et une deuxième sous-étape de positionnement du cadre amovible (1610, 1710), comportant ladite pluralité d'agrafes, dans un logement (1450, 1550) agencé dans l'outillage de forme (1400, 1500).

7. Procédé de réalisation (1200) d'une pièce métallique (30) selon la revendication 6 **caractérisé en ce que** ledit cadre amovible (1610, 1710) est formé par deux rails (1611, 1612, 1711, 1712) de sorte que lors de la deuxième sous-étape de positionnement dudit cadre amovible, chacun desdits rails (1611, 1612, 1711, 1712) dudit cadre amovible est apte à être inséré dans une encoche (1450, 1550) agencée dans ledit outillage de forme (1400, 1500), lesdites encoches (1450, 1550) formant ledit logement dudit outillage de forme (1400, 1500).

8. Procédé de réalisation (1200) d'une pièce métallique (30) selon la revendication 7 **caractérisé en ce que** lesdites encoches (1450) sont agencées dans la matrice (1440) dudit outillage (1400) de sorte que ledit cadre amovible (1610, 1710) est positionné dans ladite matrice (1440) lors de ladite étape de positionnement ou **en ce que** lesdites encoches (1550) sont agencées dans le poinçon (1520) dudit outillage (1400) de sorte que ledit cadre amovible (1610, 1710) est positionné dans ledit poinçon (1520) lors de ladite étape de positionnement.

9. Procédé de réalisation (2200) d'une pièce métallique (30) selon l'une des revendications 1 à 2 **caractérisé en ce que** ladite étape de positionnement de ladite pluralité d'agrafes comporte une première sous-étape (2240) de réalisation d'une structure métallique 2320a, 2320b) formée par l'assemblage d'une pluralité d'agrafes métalliques (301', 2401') présentant un orifice traversant (2310) et par au moins un fil métallique (2321) introduit dans ledit orifice (2310) de chacune desdites agrafes métalliques (301', 2401') de ladite pluralité et par une deuxième sous-étape (2250) de positionnement de ladite structure métallique (2320a, 2320b) dans l'outillage de forme (2400).

10. Procédé de réalisation (2200) d'une pièce métallique (30) selon la revendication 9 **caractérisé en ce que** ledit procédé comporte une étape de réalisation dudit orifice traversant (2310) de chacune des agrafes métalliques.

11. Procédé de réalisation (2200) d'une pièce métallique (30) selon la revendication 10 **caractérisé en ce que** ledit orifice traversant (2310) est réalisé par des moyens de perçage par laser, lors de ladite étape de réalisation dudit orifice traversant (2310).

12. Procédé de réalisation (3200) d'une pièce métallique (30) selon l'une des revendications 1 à 2 **caractérisé en ce que** l'étape de positionnement de ladite pluralité d'agrafes comporte une première sous-étape (3230) de réalisation d'une pluralité de structures métalliques tridimensionnelles (3350) par solidarisation d'une pluralité d'agrafes métalliques (301'), chacune desdites structures métalliques tridimensionnelles (3350) constituant une portion d'une préforme de ladite pièce à réaliser (30) et une deuxième sous-étape (3240) de positionnement de ladite pluralité de structures métalliques tridimensionnelles (3350) dans l'outillage de forme (3400, 3500, 3600).

13. Procédé de réalisation (3200) d'une pièce métallique (30) selon la revendication 12 **caractérisé en ce que** ladite sous-étape (3230) de réalisation d'une pluralité de structures métalliques tridimensionnelles (3350) est réalisée par soudage ou par collage d'une pluralité d'agrafes métalliques (301').

14. Procédé de réalisation (3200) d'une pièce métallique (30) selon l'une des revendications 12 à 13 **caractérisé en ce que** ladite sous-étape (3230) de réalisation d'une pluralité de structures métalliques tridimensionnelles (3350) est réalisée par soudage ou collage d'un clinquant métallique (3310) sur lesdites agrafes métalliques (301') constituant une structure métallique tridimensionnelle (3350), ledit clinquant métallique (3310) reliant chaque agrafe métallique (301') d'une structure métallique tridimensionnelle (3350).

15. Procédé de réalisation (200, 1200, 2200, 3200) d'une pièce métallique (30) selon l'une des revendications 1 à 14 **caractérisé en ce que** ledit procédé comporte une étape (220, 1220, 2220, 3220) de réalisation desdites agrafes métalliques (301') par pliage de tronçons métalliques (301) de forme rectiligne réalisés de préférence par formage à froid.

## Patentansprüche

1. Realisierungsverfahren (200) eines Metallstücks (30), wie z. B. einer Metallverstärkung eines Rotorblatts einer Turbomaschine, umfassend sukzessive:
- einen Schritt (230) zur Positionierung einer Vielzahl von Metallklammern (301) in einem Formwerkzeug (400, 500), das eine Matrix (410) und einen Stempel (420, 520) aufweist, wobei die genannten Metallklammern (301') Abschnitte von Metalldrähten in gerade, in U- oder in V-Form gebogener Form sind, die keine gewebte Struktur bilden;
- einen isostatischen Heißpressschritt (24) der genannten Vielzahl von Metallklammern (301'), die die Agglomeration der genannten Metallklammern (301') derart hervorruft, dass ein massives Stück (430) erhalten wird.

2. Realisierungsverfahren (200) eines Metallstücks gemäß Anspruch 1, **dadurch gekennzeichnet, dass** das genannte Verfahren ein Realisierungsverfahren einer Metallverstärkung einer Stirnkante oder einer Hinterkante der Rotorblattes einer Turbomaschine oder einer Metallverstärkung eines Propellers derart ist, dass das genannte, bei dem genannten isostatischen Pressschritt (24) erhaltene massive Stück eine Metallverstärkung ist.

3. Realisierungsverfahren (200) eines Metallstücks (30) gemäß einem der Ansprüche 1 bis 2, **dadurch gekennzeichnet, dass** der genannte Schritt zur Positionierung der genannten Vielzahl von Klammern (301') durch die Positionierung Klammer für Klammer in der Matrix (410) des genannten Formwerkzeugs (400, 500) oder durch die Positionierung Klammer für Klammer auf dem Stempel (520) des genannten Formwerkzeugs (500) realisiert ist.

4. Realisierungsverfahren (200) eines Metallstücks (30) gemäß Anspruch 3, **dadurch gekennzeichnet, dass** der genannte Positionierungsschritt (230) der genannten Vielzahl von Klammern (301') durch das Einrasten der Zweige (302, 303) der genannten Klammern (301') in in dem genannten Stempel (520) ausgesparten Öffnungen (522) realisiert ist, wobei das genannte Einrasten per elastischer Verformung der genannten Zweige (302, 303) realisiert ist.

5. Realisierungsverfahren (200) eines Metallstücks (30) gemäß irgendeinem der Ansprüche 1 bis 2, **dadurch gekennzeichnet, dass** der genannte Positionierungsschritt (230) der genannten Vielzahl von Klammern (301') einen ersten Teilschritt der Vorab-Positionierung Klammer für Klammer auf einer Formschablone und einen zweiten Positionierungs-Teilschritt der genannten Vielzahl von Klammern (301'), die auf der genannten Formschablone vorab positioniert sind, in dem genannten Formwerkzeug (400, 500) umfasst.

6. Realisierungsverfahren (1200) eines Metallstücks (30) gemäß irgendeinem der Ansprüche 1 bis 2, **dadurch gekennzeichnet, dass** der Schritt zur Positionierung der genannten Vielzahl von Klammern einen ersten Teilschritt der Vorab-Positionierung der genannten Vielzahl von Metallklammern (301', 1401') auf einem abnehmbaren Rahmen (1610, 1710) derart umfasst, dass die genannten Klammern (301', 1401') geeignet sind, an dem genannten abnehmbaren Rahmen (1610, 1710) aufgehängt zu sein, und einen zweiten Teilschritt der Positionierung des abnehmbaren Rahmens (1610, 1710), umfassend die genannte Vielzahl von Klammern in einer Aufnahme (1450, 1550), die in dem Formwerkzeug (1400, 1500) angeordnet ist.

7. Realisierungsverfahren (1200) eines Metallstücks (30) gemäß Anspruch 6, **dadurch gekennzeichnet, dass** der genannte abnehmbare Rahmen (1610, 1710) durch zwei Schienen (1611, 1612, 1711, 1712) derart geformt ist, dass bei dem zweiten Teilschritt der Positionierung des genannten abnehmbaren Rahmens jede der genannten Schienen (1611, 1612, 1711, 1712) des genannten abnehmbaren Rahmens geeignet ist, in eine Nut (1450, 1550) eingeführt zu sein, die in dem genannten Formwerkzeug (1400, 1500) angeordnet ist, wobei die genannten Nuten (1450, 1550) die genannte Aufnahme des genannten Formwerkzeugs (1400, 1500) formen.

8. Realisierungsverfahren (1200) eines Metallstücks (30) gemäß Anspruch 7, **dadurch gekennzeichnet, dass** die genannten Nuten (1450) in der Matrix (1440) des genannten Werkzeugs (1400) derart angeordnet sind, dass der genannte abnehmbare Rahmen (1610, 1710) bei dem genannten Schritt der Positionierung in der genannten Matrix (1440) positioniert ist, oder dass die genannten Nuten (1550) in dem Stempel (1520) des genannten Werkzeugs (1400) derart angeordnet sind, dass der genannte abnehmbare Rahmen (1610, 1710) bei dem genannten Positionierungsschritt in dem genannten Stempel (1520) positioniert ist.

9. Realisierungsverfahren (2200) eines Metallstücks (30) gemäß einer der Ansprüche 1 bis 2, **dadurch gekennzeichnet, dass** der genannte Schritt der Positionierung der genannten Vielzahl von Klammern einen ersten Teilschritt (2240) zur Realisierung einer Metallstruktur (2320a, 2320b) umfasst, die durch den Zusammenbau einer Vielzahl von Metallklammern (301', 2401'), die eine durchquerende Öffnung (2310) aufweisen, und durch wenigstens einen Metalldraht (2321), der in die genannte Öffnung (2310) jeder der genannten Metallklammern (301', 2401') der genannten Vielzahl und durch einen zweiten Teilschritt (2250) der Positionierung der genannten Metallstruktur (2320a, 2320b) in dem Formwerkzeug (2400) geformt ist.

10. Realisierungsverfahren (2200) eines Metallstücks (30) gemäß Anspruch 9, **dadurch gekennzeichnet, dass** das genannte Verfahren einen Realisierungsschritt der genannten durchquerenden Öffnung (2310) jeder der Metallklammern umfasst.

11. Realisierungsverfahren (2200) eines Metallstücks (30) gemäß Anspruch 10, **dadurch gekennzeichnet, dass** die genannte durchquerende Öffnung (2310) durch Laser-Durchbohrungsmittel bei dem genannten Realisierungsschritt der genannten durchquerenden Öffnung (2310) realisiert ist.

12. Realisierungsverfahren (3200) eines Metallstücks (30) gemäß einem der Ansprüche 1 bis 2, **dadurch gekennzeichnet, dass** der Positionierungsschritt der genannten Vielzahl von Klammern einen ersten Teilschritt (3230) zur Realisierung einer Vielzahl von dreidimensionalen Metallstrukturen (3350) per fester Verbindung einer Vielzahl von Metallklammern (301'), wobei jede der dreidimensionalen Metallstrukturen (3350) einen Abschnitt einer Vorform des genannten zu realisierenden Stücks (30) bildet, und einen zweiten Teilschritt (3240) der Positionierung der genannten Vielzahl von dreidimensionalen Metallstrukturen (3350) in dem Formwerkzeug (3400, 3500, 3600) umfasst.

13. Realisierungsverfahren (3200) eines Metallstücks (30) gemäß Anspruch 12, **dadurch gekennzeichnet, dass** der genannte Teilschritt (3230) zur Realisierung einer Vielzahl von dreidimensionalen Metallstrukturen (3350) per Verschweißen oder per Verklebung einer Vielzahl von Metallklammern (301') realisiert ist.

14. Realisierungsverfahren (3200) eines Metallstücks (30) gemäß einem der Ansprüche 12 bis 13, **dadurch gekennzeichnet, dass** der genannte Teilschritt (3230) zur Realisierung einer Vielzahl von dreidimensionalen Metallstrukturen (3350) per Verschweißen oder Verklebung einer Metallfolie (3310) realisiert ist, auf denen Metallklammern (301') eine dreidimensionale Metallstruktur (3350) bilden, wobei der genannte Metallflitter (3310) jede Metallklammer (301') mit einer dreidimensionalen Metallstruktur (3350) verbindet.

15. Realisierungsverfahren (200, 1200, 2200, 3200) eines Metallstücks ((30) gemäß einem der Ansprüche 1 bis 14, **dadurch gekennzeichnet, dass** das genannte Verfahren einen Schritt (220, 1220, 2220, 3220) zur Realisierung der genannten Metallklammern (301') per Falten von Metallabschnitten (301) in gerade Form umfasst, die bevorzugt per Kaltformen realisiert sind.

## Claims

1. Process for manufacturing (200) of a metal part (30), such as a metal reinforcement for turbine engine's blade, successively including:
- a step (230) for the positioning of a multiplicity of metal staples (301') in a forming tool (400, 500) presenting a die (410) and a punch (420, 520), wherein the said metal staples (301') being sections of metal wires in a rectilinear shape bended in the shape of a U or a V, not constituting a woven structure;
- a hot isostatic pressing step (240) of said plurality of metal staples (301') causing the agglomeration of the metal staples (301') so as to obtain a compact metal part (430).

2. Process for manufacturing (200) of a metal part (30) according to claim 1 **characterised in that** the said process is a process for manufacturing a metal reinforcement for leading edge or trailing edge of a turbine blade or a metal reinforcement for a propeller so that the said metal part obtained in the said isostatic pressing step (240) is a metal reinforcement.

3. Process for manufacturing (200) of a metal part (30) according to one of claim 1 to 2 **characterised in that** the said step (230) for the positioning of the said multiplicity of staples (301') is achieved by the placing of staples, staple by staple, in the die (410) of the said forming tool (400, 500) or by the placing of staples, staple by staple, on the punch (520) of the said forming tool (500).

4. Process for manufacturing (200) of a metal part (30) according to claim 3 **characterised in that** the said step (230) for the positioning of the said plurality of staples (301') is achieved by clamping of the arms (302, 303) of the said staples (301') in clamping means (522) arranged in the said punch (520), said clamping being achieved by the elastic deformation of the said arms (302, 303).

5. Process for manufacturing (200) of a metal part (30) according to one of claim 1 to 2 **characterised in that** the said step (230) for the positioning of the said multiplicity of staples (301') includes a first sub-step for pre-positioning the staples, staple by staple, on a moulding template and a second sub-step for the positioning of the said plurality of staples (301'), pre-positioned on the said moulding template, in the said forming tool (400, 500).

6. Process for manufacturing (1200) of a metal part (30) according to one of claim 1 to 2 **characterised in that** the step for the positioning of the said multiplicity of staples includes a first sub-step for the pre-positioning of the said plurality of metal staples (301', 1401') on to a detachable frame (1610, 1710) so that the said staples (301', 1401') are suspended in the said detachable frame (1610, 1710) and a second sub-step of positioning of the detachable frame (1610, 1710), including the multiplicity of staples, in a groove (1450, 1550) arranged in the forming tool (1400, 1500).

7. Process for manufacturing (1200) of a metal part (30) in accordance with claim 6 **characterised in that** the said detachable frame (1610, 1710) is formed of two rails (1611, 1612, 1711, 1712) so that during the second sub-step of positioning the said detachable frame, each of the said rails (1611, 1612, 1711, 1712) of the said detachable frame is capable of being inserted into a notch (1450, 1550) arranged in the said forming tool (1400, 1500) with the said notches (1450, 1550) forming the said groove of the said forming tool (1400, 1500).

8. Process for manufacturing (1200) of a metal part (30) according to claim 7 **characterised in that** the said notches (1450) are arranged in the die (1440) of the said machinery (1400) so that the said detachable frame (1610, 1710) is placed in the said die (1440) during the said positioning phase or **in that** said notches (1550) are arranged in the punch (1520) of said forming tool (1400) so that said detachable frame (1610, 1710) is positioned in said punch (1520) during the said positioning phase.

9. Process for the completion (2200) of a metal part (30 according to one of claim 1 to 2 **characterised in that** the said step for positioning of the said plurality of staples includes a first sub-step (2240) for manufacturing a metal structure (2320a, 2320b) formed by the assembly of a plurality of metal staples (301', 2401') presenting a crossing hole (2310) and by at least one metal wire (2321) introduced in the said hole (2310) of each of the said metal stapes (301', 2401') of the said multiplicity and by a second sub-step (2250) for the positioning of the said metal structure (2320a, 2320b) in the forming tool (2400).

10. Process for manufacturing (2200) of a metal part (30) according to claim 9 **characterised in that** the said process includes a step for manufacturing the said crossing hole (2310) of each of the metal staples.

11. Process for manufacturing (2200) of a metal part (30) according to claim 10 **characterised in that** the said crossing hole (2310) is achieved by laser drilling methods, at the time of the said step for manufacturing of the said crossing hole (2310).

12. Process for manufacturing (3200) of a metal part (30) according to one of claim 1 to 2 **characterised in that** the step for the positioning of the said multiplicity of staples includes a first sub-step (3230) for manufacturing multiple three dimensional metal structures (3350) by the fixing of a plurality of metal staples (301'), each of the said three dimensional metal structures (3350) forming a portion of a preform of the said metal part to be achieved (30) and a second sub-step (3240) for the positioning of the said three dimensional metal structures (3350) in the forming tool (3400, 3500, 3600).

13. Process for manufacturing (3200) of a metal part (30) according to claim 12 **characterised in that** the said sub-step (3230) for manufacturing a multiplicity of three dimensional metal structures (3350) is achieved by welding or by lamination of a plurality of metal staples (301').

14. Process for manufacturing (3200) of a metal part (30 according to one of claim 12 to 13 **characterised in that** the said sub-step (3230) for manufacturing a multiplicity of three dimensional metal structures (3350) is achieved by the welding or lamination of a metal foil (3310) on the said metal staples (301') forming a three dimensional metal structure (3350) with the said metal foil (3310) linking each metal staple (301') of a three dimensional metal structure (3350).

15. Process for manufacturing (200, 1200, 2200, 3200) of a metal part (30) in according to one of claim 1 to 14 **characterised in that** the said process includes a step (220, 1220, 2220, 3220) for manufacturing the said metal staples (301') by bending metal sections (301) into a rectilinear shape preferable achieved by cold forming.
